# EUROPEAN PATENT SPECIFICATION

(11) **EP 4 435 329 B1**
(45) Date of publication and mention of the grant of the patent: **09.12.2026**
(21) Application number: 21967381.1
(22) Date of filing: 24.12.2021
(51) Int. Cl.: F24C 15/20, F04D 17/16, F04D 25/08, F04D 29/42, F04D 29/60, F04D 29/70, F04D 29/44

(54) **MOVABLE HOOD**
TRAGBARE HAUBE
HOTTE MOBILE

(30) Priority: 06.12.2021 KR 20210172636
(43) Date of publication of application: 25.09.2024
(73) Proprietor: LG Electronics Inc., Yeongdeungpo-gu Seoul 07336 (KR)
(72) Inventor: KIM, Hosan, Seoul 08592 (KR); NAM, Hyeunsik, Seoul 08592 (KR); SHIM, Chanbo, Seoul 08592 (KR)
(74) Representative: Vossius & Partner Patentanwälte Rechtsanwälte mbB
(86) International application number: PCT/KR2021/019867
(87) International publication number: WO 2023/106509

(56) References cited:
- WO-A1-2018/012745
- CH-A- 454 405
- CN-U- 210 241 707
- CN-U- 212 339 545
- DE-A1- 1 679 545
- DE-T2- 69 213 079
- FR-A1- 2 843 054
- JP-A- 2000 234 776
- KR-A- 20180 058 047
- KR-A- 20180 099 393
- KR-Y1- 200 472 445

## Description

### BACKGROUND

### [Technical Field]

The present invention relates to a movable hood, and more specifically, to a movable hood used to suction and remove pollutants floating therein.

### [Background Art]

Generally, kitchens are provided with a kitchen counter on which a heating device such as an electric heater or a gas range is disposed to cook food by applying high-temperature heat to the food, such as boiling or baking.

In this case, the food to be cooked heated by the high heat of the heating device disposed on the kitchen counter generates pollutants such as smoke, odor, and oil vapor in the heating process. The pollutants may be floated by heat and spread throughout the kitchen or room. The diffused pollutants may provide an unpleasant odor to cause disgust. In particular, in a closed kitchen, the pollutants reduce workers' concentration and become a factor of harming the workers' health.

Therefore, a range hood is installed in the kitchen to exhaust the pollutants such as smoke, odor, and oil vapor generated when cooking food to the outside.

Such a range hood may include a hood main body that forms the appearance of the range hood and has an inlet formed on a lower surface thereof, and a blower for suctioning air into the hood main body and generating an airflow for discharging the air to the outside. In addition, the range hood may further include a filter installed on the hood main body to filter the air suctioned into the main body, and a pipe for forming a passage for discharging the air passing through the filter and suctioned into the main body to the outside.

An operation of the range hood configured as described above will be described as follows.

The pollutants generated in the process of heating the food to be cooked on the kitchen counter by the heating device are moved up by their own buoyancy due to a higher temperature than the surrounding air or are forcibly moved up by the airflow generated by a blower of the range hood. The moved-up pollutants may pass through the filter and may be discharged through the pipe connected to an external duct.

Although the range hood may suction some air and pollutants near the inlet formed in the lower surface of the hood main body, it is difficult to properly suction the air and pollutants located far away from the inlet. It is because, as a distance from the inlet increases, a flow rate of the suction airflow decreases in an inverse proportion to the square of the distance from the inlet.

That is, in the conventional range hoods, suction performance is quickly reduced as the distance from the inlet increases, and when a suction flow rate of a suction fan is increased, the collection efficiency of pollutants is not proportionally increased.

Nevertheless, there is a method for increasing the suction power of the range hood by increasing the suction flow rate of the suction fan, but since the consumed power of the suction fan should be increased by 23 times, that is, 8 times to double the suction flow rate of the suction fan, there is a problem that power consumption increases excessively, thereby greatly increasing noise.

Therefore, the effective suction area of the conventional range hood is inevitably limited to a small area having about a diameter of the inlet. Therefore, the conventional range hood is not suitable for removing the pollutants occurring far from the inlet.

A range hood using vortex has been developed to compensate such a disadvantage. The range hood using the vortex may generate a vortex by blowing the amount of air similar to the flow rate of the suction air into a space and can increase collection efficiency using the concentrated vortex generated as described above.

However, according to the range hood, noise is generated due to the generation of turbulence due to mutual interference between the blowing flow and the suction flow in a narrow area under the inlet.

In addition, the vortex generated from the range hood using the vortex generates a flow that blows into the space, and such a flow may cause additional diffusion of the pollutants in the space.

In addition, the range hood has a disadvantage in that the installation of additional equipment, such as a blower, a filter, and a flow pipe, for generating a vortex.

Meanwhile, recently, an exhaust device using a swirler has been introduced. The swirler is rotatably installed at the inlet side of the exhaust device. The swirler includes a disk-shaped rotational plate, a plurality of blades arranged on a lower surface of the rotational plate to form a vortex, and a driving motor for rotating the rotational plate.

The swirler configured as described above serves to expand the suction area of the exhaust device by generating the vortex near the inlet of the exhaust device upon rotating.

The larger the magnitude of the vortex generated by the swirler, the further the suction area of the exhaust device may be expanded. In particular, when a large vortex may be generated at the front side of the exhaust device, the air and pollutants located far away from the exhaust device can be suctioned more effectively.

Patent Document 1 (Korean Patent No. 10-2059802) discloses a range hood provided with a vortex fan. As shown in FIG. 1, the range hood disclosed in Patent Document 1 includes a housing 200, an upper case 300, a vortex fan 400, and a lower filter case 500.

An exhaust fan 210 is installed in the housing 200, and the upper case 300 is coupled to a lower end of the housing 200. The vortex fan 400 is installed inside the upper case 300, and the lower filter case 500 is installed to be spaced apart from a lower portion of the vortex fan 400.

The vortex fan 400 is disposed in a separation space 460 between an upper surface of the lower filter case 500 and a ceiling surface of the upper case 300. When the driving motor 220 operates, the vortex fan 400 rotates together with the exhaust fan 210.

The vortex fan 400 pushes the air in the space 460 to the outside, and the pushed airflow flows down along an inclined surface of the upper case 300 and then is discharged outward from the upper case 300 through an exhaust space 700 between an outer surface of the lower filter case 500 and an inner surface of the upper case 300.

As the airflow discharged outward from the upper case 300 is returned by a suction power of the exhaust fan 210, a vortex is generated in an outer lower portion of the lower filter case 500. That is, a kind of low pressure zone is generated in the outer periphery of the lower filter case 500, and an upward airflow appears in a central portion in which the exhaust fan 210 and the vortex fan 400 are disposed.

The upward airflow is strengthened by the suction power of the exhaust fan 210, and as the exhaust fan 210 rotates together with the vortex fan 400, the donut-shaped low pressure zone performs a circular motion. The generated whirlwind airflow makes it possible to collect gas in a wide area.

The range hood of Patent Document 1 is fixedly installed at any one location in the kitchen, for example, at an upper end of a sink. Such a range hood may slightly suction and discharge only the air near the sink in which the range hood is installed, and when cooking is performed at a location out of the kitchen, it is difficult to suction and discharge the air therearound.

There is a physical limit that, even when the suction power of a general exhaust fan such as an exhaust fan 210 provided in the range hood in Patent Document 1 is away from an inlet of the exhaust fan by only a diameter of the exhaust fan, a flow rate of the suction flow rate at the corresponding location is reduced to 1/10 or less of the suction flow rate at the inlet of the exhaust fan.

Therefore, when cooking is performed at a location away from a place at which the range hood is installed, it is not actually possible to suction and remove pollutants, such as odor or smoke, generated from the cooking area through the range hood.

In addition, the range of the vortex generated by the vortex fan 400 of the range hood in Patent Document 1 is much greater than the range of the range hood. Therefore, when the range hood is installed in a dining table or a kitchen space, an additional space for maintaining the vortex generated by the vortex fan 400 should be secured sufficiently.

That is, the range hood provided with the vortex fan 400 as disclosed in Patent Document 1 has a limit in installation space in that the range hood should be installed at a dining table or in a kitchen space in a state in which a sufficient additional space is secured.

In addition, when the range hood is installed at the dining table or in the kitchen space, there is a possibility that a vortex may be in direct contact with a user who is cooking or eating at the dining table or in the kitchen space. In this case, there may be problems that it becomes difficult to properly maintain the vortex and considerable discomfort may be given to the user.

In addition, the vortex fan 400 of the range hood disclosed in Patent Document 1 may effectively generate a vortex under the condition of being rotated at a specific speed. That is, when rotating at a speed outside an appropriate range, the vortex fan 400 may not properly generate a vortex.

When the rotational speed of the vortex fan 400 is outside the appropriate range, the vortex may not be properly generated, and therefore, there may be a phenomenon in which the suction performance of the range hood is further degraded when the vortex fan 400 is operated than when the vortex fan 400 is not operated.

That is, in Patent Document 1, when the rotation speed of the vortex fan 400 may not be well maintained within the appropriate range, there may be a problem in which the suction performance is rather degraded compared to the range hood without the vortex fan 400.

In addition, in Patent Document 1, two fans are built into one range hood. That is, the exhaust fan 210 and the vortex fan 400 are installed together inside the range hood, and the exhaust fan 210 and the vortex fan 400 are arranged in a row in a vertical direction.

Therefore, the range hood of Patent Document 1 has a considerably great width due to the vortex fan 400 and has a considerably great thickness in the vertical direction due to the two fans arranged in a row in the vertical direction.

The range hood of Patent Document 1 has problems that it is difficult to install the range hood in a narrow kitchen space and it is difficult to use the range hood in a portable manner due to its size and weight.

That is, in the range hood of Patent Document 1, it is difficult to to use the range hood in a state of being disposed on a sink or a dining table due to its size and it is difficult to move the range hood due to its weight, making it actually impossible to use the range hood in a portable manner.

In the range hood of Patent Document 1, the suction flow is generated upward. When the suction flow is generated upward as described above, there is a high possibility that such polluted air will eventually be suctioned into the range hood even when the polluted air leaks from the range hood while being suctioned.

However, when a location at which the range hood is installed and a location at which cooking is performed are far away from each other, for example, when the range hood is fixedly installed on the upper end of the sink and cooking is performed at an island dining table far away from the range hood, the range hood of Patent Document 1 cannot actually suction and filter the polluted air generated in the cooking process performed at the island dining table.

To treat the polluted air generated in the cooking process at the island dining table, etc., a portable type movable range hood rather than the range hood installed at the fixed location is needed.

The portable type range hood may be installed in a state of being placed on a flat bottom surface, such as an island dining table. The portable type range hood may be easily moved to the cooking location to suction the polluted air generated in the cooking process.

However, the portable type range hood is installed in a state of being placed on the bottom surface rather than being installed in a state of hanging from top, making it difficult to generate an upward suction flow.

That is, the portable type range hood is disposed horizontally adjacent to the polluted air source rather than being disposed above the polluted air source, making it difficult to generate the upward suction flow.

When the portable type range hood generates the upward suction flow without interfering with cooking, the size of the portable type range hood may inevitably be very large.

Patent Document 2 (Korean Patent No. 10-1891256) discloses a portable hood. As shown in FIG. 2, the portable hood disclosed in Patent Document 2 includes a body 100, a head 200, and a connector 300.

The body 100 may be placed on a flat surface, such as a dining table or the ground and supports the head 200 and the connector 300. The connector 300 connects the body 100 with the head 200.

In addition, the head 200 may be seated on the body 100 when the portable hood 1 is in a state of being fully folded and may protrude forward more than the body 100 when the portable hood 1 is in a state of being fully unfolded.

The head 200 may suction and purify air at the bottom and then discharge the air upward. The head 200 may include a housing 210, an air guide, a blower, a diffuser 240, a discharge grill 250, and a filter unit.

The housing 210 forms the appearance of the head 200, and an air guide is disposed in the housing 210. The blower is disposed in the air guide.

The diffuser 240 is coupled to an upper end of the air guide and an upper end of the housing 210 to diffuse the air blown by the blower. In addition, the discharge grill 250 is coupled to an upper end of the diffuser 240, and the filter unit is disposed in the housing 210 and coupled to a lower end of the air guide.

A connector accommodation groove 130 is formed in an upper surface of the body 100. When the head 200 is in a state of being folded above the body 100, the connector 300 may be accommodated in the connector accommodation groove 130. When the head 200 is in the state of being folded above the body 100, the connector 300 is accommodated in the connector accommodating groove 130, and thus the connector 300 may be invisible when viewed from the outside of the portable hood 1.

When the blower is operated, the head 200 may suction air at the bottom and discharge the air upward. The head 200 may be moved in a vertical direction and in a front-rear direction in a state of being connected to the connector 300. In addition, the head 200 may be tilted by being rotated vertically, or the head 200 may be rotated horizontally to adjust the location of the head 200.

According to the portable hood 1 of Patent Document 2, the head 200 may move in the vertical and front-rear directions and may be located at the top of the cooking appliance. The portable hood 1 provided with the head 200 may generate an upward suction flow.

In the portable hood 1 of Patent Document 2, a length of the connector 300 is limited to about a length within a diameter of the body 100. Since the diameter of the head 200 is also similar to the diameter of the body 100, the length of the connector 300 may be limited to about a length within the diameters of the body 100 and the head 200.

Therefore, unless the size of the body 100 or the head 200 becomes very large, it is difficult for the head 200 to be located far upward from the cooking appliance due to the limited length of the connector 300.

That is, in order for the portable hood 1 to generate the upward suction flow at the top of the cooking appliance, the head 200 is inevitably located at the top not far from the cooking appliance. As described above, when the head 200 is disposed adjacent to the cooking appliance at the top of the cooking appliance, there is a problem that the portable hood 1 interferes with cooking.

However, when the size of the body 100 is increased to increase the length of the connector 300, the size of the portable hood 1 becomes unnecessarily large. As the size of the portable hood 1 increases as described above, it is difficult to secure the arrangement space for the portable hood 1 and it is also difficult to move the portable hood 1 due to the increase in size and weight of the portable hood.

In addition, since the portable hood 1 of Patent Document 2 discharges the suctioned air back into the inside without discharging the suctioned air to the outside, the air should be purified by performing filtering once.

To this end, a filter unit should include a large number of filters or should be provided with an expensive filter. However, when the expensive filter is applied to the filter unit, there is a problem that the manufacturing cost increases accordingly. In addition, as the number of filters increases, the size of the device increases, and the suction performance is inevitably degraded due to increased flow resistance.

Considering such a point, it is difficult for the filter unit to include a large number of filters or an expensive filter, and thus it can be fully seen that it is difficult for the portable hood 1 of Patent Document 2 to fully purify polluted air by performing filtering once.

In addition, a suction area of the portable hood 1 of Patent Document 2 is inevitably smaller than that of the range hood of Patent Document 1 due to the nature of the portable hood 1, which has a limit in increasing its size. Therefore, the portable hood 1 of Patent Document 2 inevitably faces the difficulty in effectively collecting polluted air generated in the cooking process.

DE 692 13 079 T2 relates to a fluid-treating apparatus adapted to clean, condition, or otherwise treat the air inside the local space.

CH 454 405 A relates to an extractor hood with a disc-shaped filter arranged in the flow path of the air conveyed by a fan.

JP 2000 234776 A relates to a ventilation device that generates spiral swirling vortex flows in opposite directions, one in the intake direction and the other in the exhaust direction, thereby exhausting air within a specific local area to the outside.

Further related technologies are disclosed in FR 2 843 054 A1, WO 2018/012745 A1 and DE 16 79 545 A1.

### [Related Art Documents]

### [Patent Documents]

(Patent Document 1) Korean Patent No. 10-2059802
(Patent Document 2) Korean Patent No. 10-1891256

### [Technical Problem]

The present invention is directed to providing a movable hood capable of effectively collecting pollutants generated in a cooking process at locations out of an installation place of the typical range hood, such as a kitchen.

In addition, the present invention is directed to providing a movable hood capable of effectively increasing the collection efficiency for pollutants without greatly increasing in power consumption.

In addition, the present invention is directed to providing a movable hood capable of being disposed to freely move at various locations and effectively purifying pollutants.

In addition, the present invention is directed to providing a movable hood capable of being easily and quickly installed even in a narrow space.

In addition, the present invention is directed to providing a movable hood having a small thickness to be sufficiently installed even in a narrow cooking space.

In addition, the present invention is directed to providing a movable hood that does not add cumbersome installation work or interfere with the activities of a cooking user due to the installation of an additional structure.

In addition, the present invention is directed to providing a movable hood with improved structure capable of providing improved performance and suppressing an increase in the manufacturing cost and the manufacturing process.

In addition, the present invention is directed to providing a movable hood with improved structure capable of effectively collecting pollutants and preventing the influence on the combustion of a cooking appliance.

In addition, the present invention is directed to providing a movable hood with improved structure capable of providing improved performance and reducing a user's discomfort felt in an operating process of the movable hood.

### [Technical Solution]

A movable hood according to an example, for achieving the objects includes a fan configured to suction outside air through an inlet and discharge at least some of the suctioned air through a discharge port, and a flow guide part configured to guide a movement of the air discharged from the fan toward a discharge port, wherein an inlet and the discharge port are disposed in front of the fan, and the discharge port is disposed outside the inlet.

In addition, according to another example, the movable hood includes a fan configured to suction outside air through an inlet and discharge at least some of the suctioned air through a discharge port, and a flow guide part configured to guide the movement of the air discharged from the fan toward the discharge port, wherein the inlet and the discharge port are disposed at a location biased to one side in a first direction more than the fan, and the discharge port is disposed outside the inlet with respect to a radial direction orthogonal to the first direction.

With this configuration, by forming the air curtain near a suction flow, it is possible to increase suction efficiency for polluted air generated from a cooking object.

According to another example, the movable hood includes a fan configured to suction outside air of a front side at a rear side and discharge the outside air in a centrifugal direction, a flow guide part configured to guide the movement of the air discharged from the fan forward, and a discharge port configured to form a passage for discharging the air moving through the flow guide part forward.

According to another example, the movable hood includes a fan configured to suction outside air through an inlet and discharge at least some of the suctioned air through a discharge port, and a flow guide part configured to guide the movement of the air discharged from the fan toward the discharge port, wherein the inlet and the discharge port are disposed in a centrifugal direction.

In addition, according to another example, the movable hood includes a fan configured to suction outside air and discharge the suctioned air in a direction differing from a suction direction, and a filter configured to filter the air introduced by the fan, wherein a discharge port configured to form a passage for discharging the air discharged from the fan to the outside is disposed outside an area in which the outside air is suctioned

The movable hood can purify the polluted air generated during cooking while changing the location as needed without being fixedly installed at any location.

In addition, according to another example, the movable hood includes a fan configured to generate a suction flow suctioning outside air from a front side, a filter configured to filter the air suctioned by the fan, and a flow guide part configured to guide an airflow so that the air passing through the filter is discharged forward from the outside of the suction flow.

Therefore, the re-suction of the air discharged after being already filtered may be guided by the air curtain formed at both left and right sides of the movable hood.

The movable hood having such a configuration can more effectively purify polluted air generated in a cooking process by performing a repetitive purification operation for the polluted air.

In addition, according to another example, the movable hood includes a fan configured to suction outside air through an inlet disposed at a front side and discharge at least some of the suctioned air through a discharge port disposed at the front side.

In addition, according to another example, the inlet and the outlet are disposed in a centrifugal shape at the front side of the fan, and the suction of the outside air through the inlet and the discharge of the air through the discharge port are performed by one fan.

A movable hood according to the present invention includes a case in which an accommodation space having an open one side in a first direction is formed, a fan accommodated in the accommodation space and configured to suction outside air through an inlet and discharge at least some of the suctioned air through a discharge port, and a flow guide part configured to guide a movement of the air discharged from the fan toward the discharge port.

Here, the inlet and the discharge port are disposed at a location biased to one side in the first direction more than the fan.

In addition, the discharge port is disposed outside the inlet with respect to the radial direction orthogonal to the first direction.

In addition, the fan may discharge at least some of the suctioned air in a centrifugal direction that is a direction facing the outside in the radial direction, and the flow guide part forms a discharge passage connecting the fan with the discharge port.

It is preferable that the discharge passage guides the movement of the air discharged from the fan so that a movement direction of the air moving toward the discharge port becomes a direction between the first direction and the centrifugal direction.

In addition, the flow guide part includes a shroud accommodated in the accommodation space and surrounding the fan outside in the radial direction, and an orifice shell disposed between the fan and the shroud with respect to the radial direction and surrounding the fan outside in the radial direction.

The discharge passage is formed between the shroud and the orifice shell.

In addition, it is preferable that a width of the discharge port is smaller than or equal to a width of the discharge passage, and the width of the discharge passage is gradually reduced toward the discharge port.

In addition, it is preferable that the case and the shroud are formed integrally.

In addition, the case may be disposed at a location biased to the other side in the first direction more than the fan and may include a first surface forming a surface orthogonal to the first direction.

In addition, the shroud may include an outer skirt portion forming a surface extending from the first surface in a direction between the first direction and the centrifugal direction, and an outer connection portion connecting the first surface with the outer skirt portion to be rounded.

In addition, it is preferable that the orifice shell is disposed between the fan and the outer skirt portion with respect to the radial direction.

In addition, the orifice shell may include a ring-shaped portion disposed to be spaced at a predetermined interval from the first surface in the first direction and having a first through hole formed therein in the radial direction, an inner skirt portion forming a surface extending from the ring-shaped portion in a direction between the first direction and the centrifugal direction, and an inner connection portion connecting the ring-shaped portion with the inner skirt portion to be rounded.

It is preferable that the inner skirt portion is disposed between the fan and the outer skirt portion with respect to the radial direction.

In addition, the outer connection portion and the inner connection portion may be disposed to be spaced at a predetermined interval from each other in the first direction, and the outer skirt portion and the inner skirt portion may be disposed to be spaced at a predetermined interval from each other in the radial direction.

Here, it is preferable that the discharge passage is formed between the outer connection portion and the inner connection portion and between the outer skirt portion and the inner skirt portion.

In addition, it is preferable that an interval between the outer skirt portion and the inner skirt portion is gradually reduced toward one side in the first direction.

In addition, the case may be disposed at a location biased to the other side in the first direction more than the fan and may include a cover surface forming a surface orthogonal to the first direction.

In addition, it is preferable that a second through hole is formed to pass through the cover surface in the first direction, and the first through hole and the second through hole communicate with the discharge passage.

In addition, it is preferable that the outer skirt portion is connected to an inner circumferential surface of the cover surface surrounding the second through hole, the inner skirt portion is disposed to be spaced at a predetermined interval from the outer skirt portion in the radial direction inside the second through hole, and the second through hole is partitioned into the inlet therein in the radial direction and the discharge port outside in the radial direction using the inner skirt portion as a boundary.

In addition, it is preferable that the inlet and the discharge port are arranged coplanarly in the radial direction.

In addition, the movable hood according to the present invention may further include a blade disposed at the discharge port and connecting the inner circumferential surface of the cover surface with the inner skirt portion or the outer skirt portion with the inner skirt portion.

Preferably, a plurality of blades may be arranged to be spaced at a predetermined interval from each other in a circumferential direction of the second through hole.

In addition, it is preferable that the blade is formed to protrude from the inner skirt portion in the centrifugal direction.

In addition, it is preferable that the shroud and the ring-shaped portion or the first surface and the ring-shaped portion are spaced at a predetermined interval from each other in the first direction and are coupled in the first direction.

In addition, the movable hood according to the present invention may include a coupling protrusion protruding from the shroud in the first direction, and a coupling boss provided on one side surface of the ring-shaped portion facing the first surface and coupled to the coupling protrusion in the first direction.

In addition, it is preferable that the coupling protrusion and the coupling boss are disposed outward from the fan in the radial direction.

In addition, it is preferable that the movable hood according to the present invention further includes a filter disposed between the inlet and the fan to filter the air suctioned into the fan.

In addition, the shroud may further include a ring-shaped support wing protruding from the inner skirt portion in a centrifugal direction that is a direction facing the inside in the radial direction.

Preferably, a location of the filter in the first direction may be restricted by the support wing.

In addition, the movable hood according to the present invention may further include a fixing cover configured to fix the filter to the orifice shell.

It is preferable that the fixing cover is in contact with the support wing and coupled to the orifice shell.

In addition, the fixing cover may include a first fixing cover portion coupled to the inside of the inner skirt portion in the radial direction so that an end portion of the other side in the first direction is in contact with the support wing and configured to support the filter at the other side in the first direction, and a second fixing cover portion configured to support the filter at one side in the first direction and coupled to the first fixing cover portion or the inner skirt portion.

In addition, the first fixing cover portion may include a support surface formed in a ring shape corresponding to the support wing and disposed between the support wing and the filter, and an extension surface extending from the support surface in the first direction and disposed between the inner skirt portion and the filter.

In addition, a plurality of support protrusions may be arranged on the first fixing cover portion in a circumferential direction of the support surface, each of the support protrusions may be formed to protrude from the support surface to one side in the first direction, and the filter may be supported by the support protrusion and disposed to be spaced at a predetermined interval from the support surface.

In addition, the movable hood according to the present invention may further include a driver accommodated in the accommodation space to rotate the fan.

In addition, the movable hood according to the present invention may further include a bracket plate installed at the other side of the case in the first direction to support the driver.

In addition, the movable hood according to the present invention may further include a battery electrically connected to the driver, and the battery may be disposed at one side or the other side of the case in the second direction.

In addition, the movable hood according to the present invention may further include a battery case accommodating the battery therein and installed at one side or the other side of the case in the second direction, and a display disposed at one side of the battery case in the first direction and electrically connected to the battery.

In addition, the movable hood according to the present invention may further include a support coupled to the case outside the case in the third direction to support the case.

### [Advantageous Effects]

According to the movable hood of the present invention, by allowing the movable hood to purify the polluted air generated during cooking while changing its location as needed rather than being fixedly installed at any one location, it is possible to effectively purify both the polluted air generated at the installation place of the typical range hood and the polluted air generated in the cooking process performed at the location out of the installation place of the typical range hood.

Since the portable hood according to the present invention may be used by being moved to the location desired by the user, such as a kitchen, a dining table, a room, a lounge, a living room, or an outdoor, the portable hood can be highly used.

In addition, according to the present invention, by forming the air curtain near the suction flow to increase the suction efficiency for the polluted air generated from the cooking object, it is possible to provide the more improved suction performance and pollutant removal performance.

In addition, according to the present invention, it is possible to provide the more improved pollutant removal performance by achieving the n^{th} filtering effect in which the polluted air is repeatedly suctioned and filtered multiple times.

Therefore, according to the present invention, the movable hood may be disposed to be freely moved to various locations rather than the typical hood installation location, thereby more efficiently collecting the pollutants generated in the cooking process and very effectively purifying polluted air near the cooking area.

In addition, according to the present invention, by improving the suction efficiency for the polluted air using the air curtain, it is possible to increase very effectively the collection efficiency for the pollutants without increasing the suction flow rate of the fan and effectively increase the collection efficiency for the pollutants without greatly increasing power consumption.

In addition, according to the present invention, by allowing the air curtain generated by the operation of the fan module to serve as the structure such as a blocking film or an awning, it is possible to provide the movable hood having the more improved suction performance without any hassle of installing an additional structure.

In addition, by allowing the suction flow and the discharge flow to be generated by one fan, it is possible to provide the movable hood having the small thickness sufficient to be installed even in the narrow cooking space.

In addition, according to the present invention, by allowing the air curtain generated by the operation of the fan module to serve as the structure such as a blocking film or an awning, it is possible to improve the suction performance without interfering with the user's cooking activity.

In addition, according to the present invention, by forming the air curtain using the discharge flow generated from the fan module suctioning the polluted air, it is possible to effectively generate the air curtain without separately adding the fan for forming the air curtain.

The present invention can provide the movable hood capable of suppressing the addition of the manufacturing cost and the manufacturing process and having more improved performance.

In addition, according to the present invention, it is possible to stably maintain the combustion of the heating device and effectively remove the pollutants generated by the heat generated by the corresponding heating device.

In addition, according to the present invention, by forming the air curtain using the air purified by the filter inside the movable hood, it is possible to effectively suppress the polluted air from facing the user.

The present invention can provide the effect of significantly reducing the discomfort felt by the user when the airflow generating the air curtain reaches the user.

### [Description of Drawings]

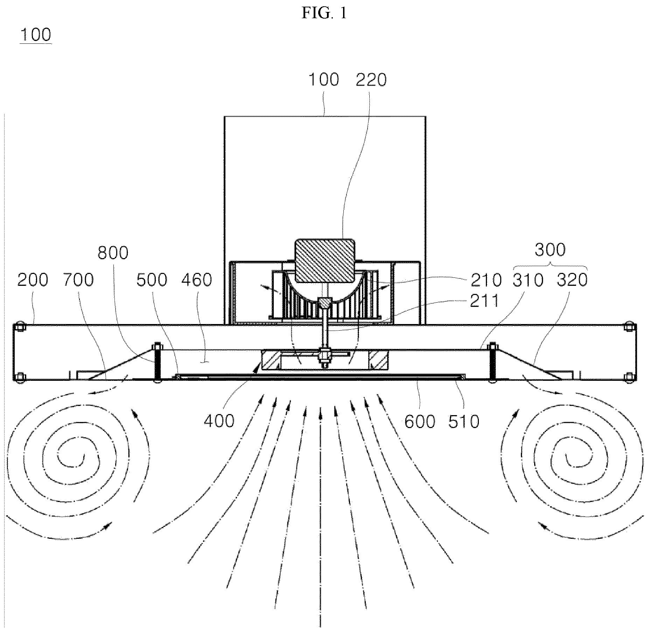

FIG. 1 is a cross-sectional view of a range hood having a vortex fan according to the related art.

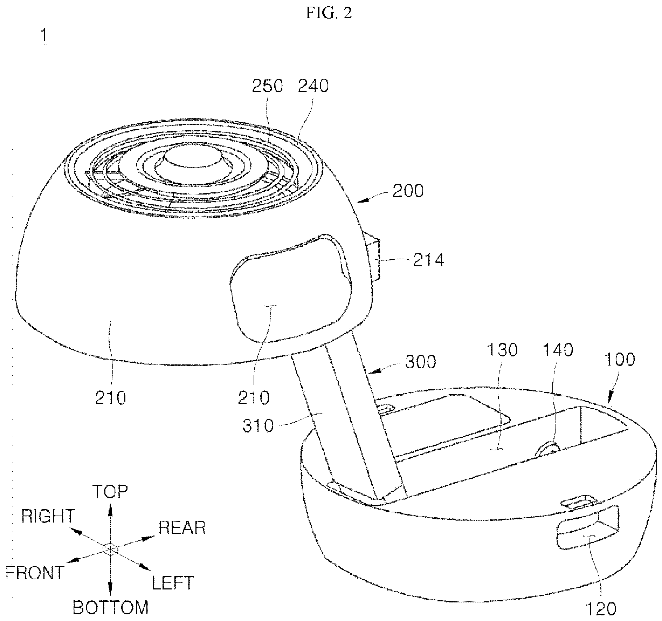

FIG. 2 is a perspective view of a state in which a portable hood according to the related art is fully unfolded.
FIG. 3 is a perspective view showing a movable hood according to one embodiment of the present invention.
FIG. 4 is an exploded perspective view showing a disassembled state of the movable hood shown in FIG. 3.
FIG. 5 is a cross-sectional view along line "V-V'" in FIG. 3.
FIG. 6 is a perspective view separately showing a case and a shroud according to one embodiment of the present invention.
FIG. 7 is a perspective view separately showing an orifice shell according to one embodiment of the present invention.
FIG. 8 is a perspective view separately showing an orifice shell, a filter, and a fixing cover according to one embodiment of the present invention.
FIG. 9 is a configuration diagram schematically showing a portion of a configuration of the movable hood according to one embodiment of the present invention.
FIG. 10 is a side cross-sectional view showing an airflow inside the movable hood shown in FIG. 5.
FIG. 11 is a side cross-sectional view showing the trend of a rate of the airflow near a range hood without air curtain function.
FIG. 12 is a side cross-sectional view showing the trend of a rate of the airflow near the movable hood in an operating state of the movable hood shown in FIG. 5.
FIG. 13 is a side cross-sectional view showing an air volume state near the movable hood in the operating state of the movable hood shown in FIG. 5.

### [Modes of the Invention]

The above-described objects, features, and advantages will be described below in detail with reference to the accompanying drawings.

The accompanying drawings are only for easy understanding of the embodiments disclosed in the specification.

The terms used in the present specification are only used to describe specific implementations or embodiments and are not intended to limit the present invention. The singular expression includes the plural expression unless the context clearly dictates otherwise. In the specification, terms "~include," "~consist of," etc. are intended to specify the presence of features, numbers, steps, operations, components, parts, or combinations thereof described in the specification. That is, it should be understood that terms "~include," "~consist of," etc. in the specification do not preclude the possibility of the presence or addition of one or more other features, numbers, steps, operations, components, parts or combinations thereof in advance.

Terms including ordinal numbers such as first or second may be used to describe various components, but the components are not limited by the terms. The terms are used only for the purpose of distinguishing one component from another.

When a first component is described as being "connected" or "coupled" to a second component, it should be understood that the first component may be directly connected or coupled to the second component or a third component may be present therebetween. On the other hand, when the first component is described as being "directly connected" or "directly coupled" to the second component, it should be understood that the third component is not present therebetween.

When a certain component is described as being "above" or "under" another component, it should be understood that the certain component may be disposed directly above another component and other components may also be present therebetween.

Unless defined otherwise, all terms used herein, including technical or scientific terms, have the same meaning as commonly understood by those of ordinary skill in the art to which the present invention pertains. Terms such as those defined in a commonly used dictionary should be construed as having a meaning consistent with the meaning in the context of the related art and should not be construed in an ideal or excessively formal meaning unless explicitly defined in the application.

In a state in which a movable hood is placed on the floor, a direction in which a grill is installed with respect to the center of the movable hood is defined as a front side For convenience, a direction facing the front and rear sides can be referred to as a first direction. Then, the front side may be one side in the first direction, and the rear side may be the other side in the first direction.

In addition, a direction of gravity can be defined as downward, and a direction opposite to the direction of gravity can be defined as upward.

In addition, a horizontal direction perpendicular to a front-rear direction of the movable hood, that is, a width direction of the movable hood when viewing the movable hood from the front of a grill of the movable hood can be referred to as a left-right direction. For convenience, the left-right direction can be referred to as a second direction. Then, a right side can be referred to as one side in the second direction, and a left side can be referred to as the other side in the second direction.

In addition, the width direction of the movable hood may be referred to as a lateral direction. Then, the right side can be referred to as one side in the lateral direction, and the left side can be referred to as the other side in the lateral direction.

In addition, the above-described vertical direction can be referred to as a third direction. Then, an upper side can be referred to as one side in the third direction, and a lower side can be referred to as the other side in the third direction.

In addition, the above-described vertical direction can be referred to as a vertical direction. Then, the front-to-rear direction and the left-right direction, that is, the first direction and the second direction can be referred to as a horizontal direction.

Throughout the specification, when "A and/or B" is described, it means A, B, or A and B unless otherwise stated, and when "C to D" is described, it means C or more and D or less unless otherwise stated.

### [Overall structure of the cooking appliance]

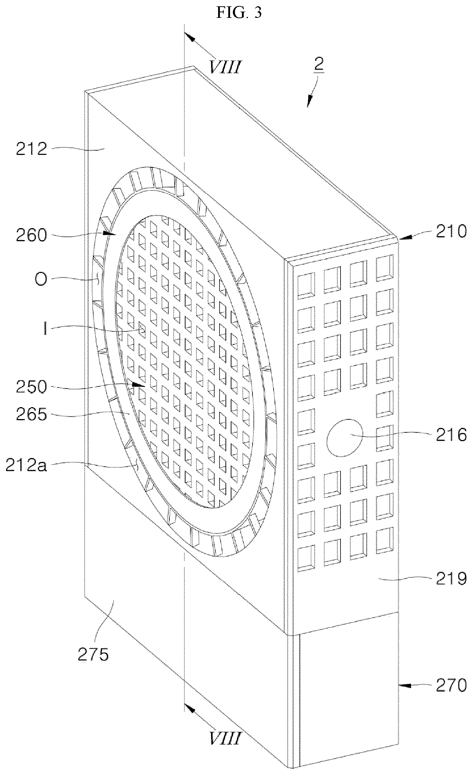

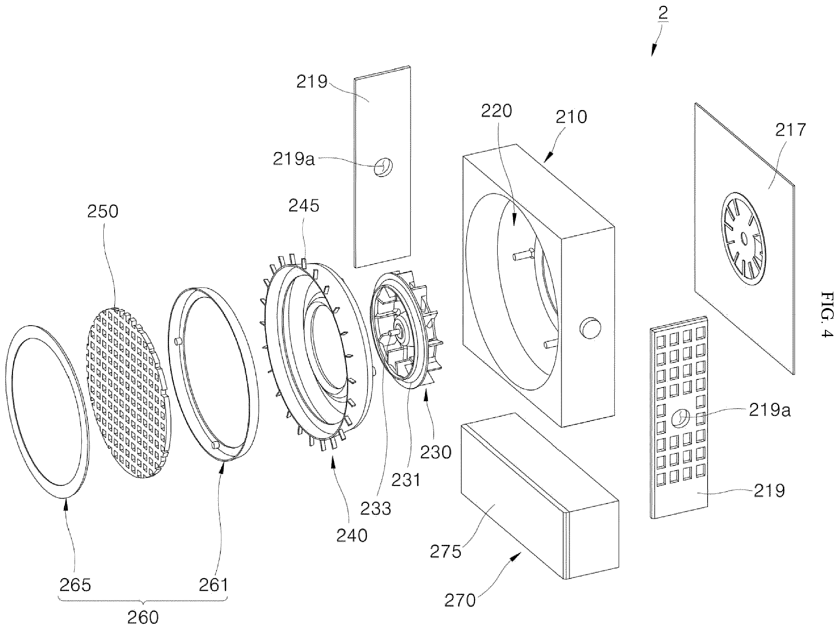

FIG. 3 is a perspective view showing a movable hood according to one embodiment of the present invention, and FIG. 4 is an exploded perspective view showing a disassembled state of the movable hood shown in FIG. 3.

Referring to FIGS. 3 and 4, a movable hood 2 according to another embodiment of the present invention is not fixed to a specific location and may be installed at a location at which the polluted air needs to be purified. That is, a location of the movable hood 2 according to the present embodiment may be freely changed as needed. The movable hood 2 may include a case 210, a fan module 230, and a flow guide part.

The case 210 forms the appearance of the movable hood 2 according to the present embodiment. In the present embodiment, it is shown that the case 210 is formed in a substantially hexahedral shape. An accommodation space having an open one side in the first direction may be formed inside the case 210.

The case 210 may accommodate components constituting the movable hood 2, such as the fan module 230 and the moving guide part, therein. In addition, the case 210 may form the appearance of the movable hood 2. According to the invention, the case is provided to be seated on the ground, an upper plate of a sink, a floor of a dining table.

The movable hood 2 according to the present embodiment provided with the case 210 may be provided in a form that may be easily moved to a place in which cooking is performed, such as a sink, a dining table, or an island dining table, without being fixedly installed at any one location.

Hereinafter, for convenience, one side in the first direction will be referred to as the front side, the other side in the first direction will be referred to as the rear side, one side in the second direction will be referred to as the upper side, the other side in the second direction will be referred to as the lower side, and one side and the other side in the third direction will be referred to as the right side and the left side, respectively.

An inlet I and an outlet O may be provided on the open front side of the case 210. The inlet I may form a passage for allowing outside air to flow into the fan module 230 on a front surface of the movable hood 2. In addition, the outlet O may form a passage for allowing the air suctioned into the fan module 230 to be discharged to the outside of the movable hood 2 on the front surface of the movable hood 2.

The inlet I may form a passage that opens the inside of the case 210 in the first direction, that is, the front-back direction. In addition, the outlet O may form a passage that opens the inside of the case 210 in the front-rear direction.

In the present embodiment, it is shown that both the inlet I and the outlet O are formed on the front surface of the movable hood 2, and the inlet I and the outlet O are arranged in a radial direction. Here, the radial direction is a direction perpendicular to the front-rear direction and is defined as a direction parallel to a direction in which a diameter of a rotational body about an axis in the front-rear direction extends.

The fan module 230 may be accommodated inside the case 210, that is, in the accommodation space. The fan module 230 may suction the outside air through the inlet I and discharge at least some of the suctioned air toward the outlet O.

The fan module 230 may suction the outside air in the front-rear direction and then re-discharge the suctioned air in the front-rear direction through the outlet O. For example, the fan module 230 may suction the outside air from the front side and then discharge the outside air back to the front side through the outlet O.

As described above, the flow of the air discharged by the fan module 230 may serve as an air curtain formed at the radial outside of the suction flow generated at the front side of the movable hood 2 by the fan module 230. Detailed description thereof will be made below.

Like the fan module 230, the flow guide part may be accommodated inside the case 210, that is, in the accommodation space. The flow guide part is provided to guide the movement of the air discharged from the fan module 230 toward the outlet O. Detailed structure and operation of the flow guide part will be described below.

### [Structure of the case]

The case 210 may be formed in a substantially hexahedral shape, the accommodation space is formed inside the case 210, and the front surface of the case 210 is open. The case 210 may be formed in a hexahedral shape including a first surface 211, a pair of second surfaces 213, and a pair of third surfaces 215.

The first surface 211 may be provided in a form that forms a surface perpendicular to an axis in the front-rear direction. The first surface 211 may form a back surface of the case 210.

The pair of second surfaces 213 may be disposed to face each other vertically with the first surface 211 interposed therebetween. Each second surface 213 may be provided in a form that forms a surface perpendicular to an axis in the vertical direction. The second surface 213 may form top and bottom surfaces of the case 210.

The pair of third surfaces 215 may be disposed to face each other in the left-right directions with the first surface 211 and the second surface 213 interposed therebetween. Each third surface 215 may be provided in a form that forms a surface perpendicular to an axis in the left-right direction. The third surface 215 may form both side surfaces of the case 210.

The case 210 including the first surface 211, the second surface 213, and the third surface 215 may be formed in a form of a box of a substantially hexahedron shape in which the accommodation space is formed therein and a front surface is open.

The movable hood 2 according to the present embodiment may further include a bracket plate 217. The bracket plate 217 may be installed at the rear side of the case 210. As an example, the bracket plate 217 may be coupled to the rear side of the first surface 211. The bracket plate 217 may serve to support the fan module 230 at the rear side of the fan module 230.

In addition, an installation hole 211a may be provided in the first surface 211. The installation hole 211a may be formed to pass through the first surface 211 in the front-rear direction. The installation hole 211a may form, on the case 210, a passage that connects the fan module 230 accommodated inside the case 210 with the bracket plate 217 installed at the rear side of the case 210.

In addition, the movable hood 2 according to the present embodiment may further include a support 219. The support 219 may be coupled to the case 210 outside in the left-right direction to support the case 210. In the present embodiment, it is shown that the support 219 is disposed at each of both left and right sides of the case 210.

Each support 219 may be formed in a shape corresponding to the third surface 215 of the case 210, may cover the third surface 215 outside, and may be coupled to the side surface of the case 210.

A protruding shaft 216 may be provided in the case 210. The protruding shaft 216 may be provided on the third surface 215 and formed to protrude laterally from the third surface 215. The protruding shaft 216 may be provided at each of both sides of the case 210.

As an example, the protruding shaft 216 may be formed in a lying cylindrical shape. The protruding shaft 216 formed as described above may be rotatably coupled to the support provided to support the movable hood 2. The protruding shaft 216 may be rotatably coupled to the support to rotate about an axis in the lateral direction to allow the movable hood 2 to be rotatably supported by the support.

The movable hood 2 may be installed on the support 290 to be tilted by the protruding shaft 216.

Meanwhile, the support 219 may be coupled to the side surface of the case 210 by being coupled to the protruding shaft 216. To this end, a fitting hole 219a may be provided in the support 219. The fitting hole 219a may be formed to pass through the support 219 in the lateral direction.

The protruding shaft 216 may be inserted into the fitting hole 219a and fitted into the support 219 to firmly couple the support 219 to the side surface of the case 210. In this case, a lateral end portion of the protruding shaft 216 does not protrude outward from the support 219 and may be formed coplanarly with the support 219.

As described above, the support 219 coupled to the side surface of the case 210 can increase the durability of the movable hood 2 by supporting the case 210.

In addition, the support 219 can prevent the protruding shaft 216 from protruding outward from the movable hood 2 in a state in which the movable hood 2 is not installed on the support and is disposed alone, thereby allowing the appearance of the movable hood 2 to be smoothly maintained and contributing to suppressing the occurrence of safety accidents and damage to products due to the protruding portion of the movable hood 2.

### [Structure of the fan module]

The fan module 230 may include a fan 231 and a driver 233.

The fan 231 is accommodated in the accommodation space inside the case 210.

This fan 231 may suction the outside air in the front-rear direction by rotating about the axis in the front-rear direction.

The fan 231 suctioning the outside air as described above may discharge the outside air in the front-rear direction. In the present embodiment, it is shown that the fan 231 is provided in a form of a centrifugal fan. The fan 231 may rotate about the axis in the front-rear direction to suction air at the front side and discharge the air in a centrifugal direction.

The driver 233 may provide a driving force for rotating the fan 231. As an example, the driver 233 may be provided in a form of an electric motor. The driver 233 may be connected to the fan 231 to rotate the fan 231 about the axis in the front-rear direction.

The fan 231 rotated by the driver 233 may generate a suction flow that induces a flow of the outside air so that the outside air at the front side of the movable hood 2 is suctioned into the movable hood 2.

The outside air passes through the inlet I and flow into the movable hood 2 by the suction flow generated by the fan 231. The air introduced as described above may move to the rear side inside the movable hood 2 and may be suctioned into the fan 231 inside the case 210.

The air suctioned into the fan 231 may be discharged in the centrifugal direction, which is outward in the radial direction, from the fan 231, and the flow of the air discharged as described above may be guided to the outlet O of the case 210 by the flow guide part. The air moving toward the outlet O of the case 210 may be discharged to the front side of the movable hood 2 through the outlet O.

### [Structure of the flow guide part]

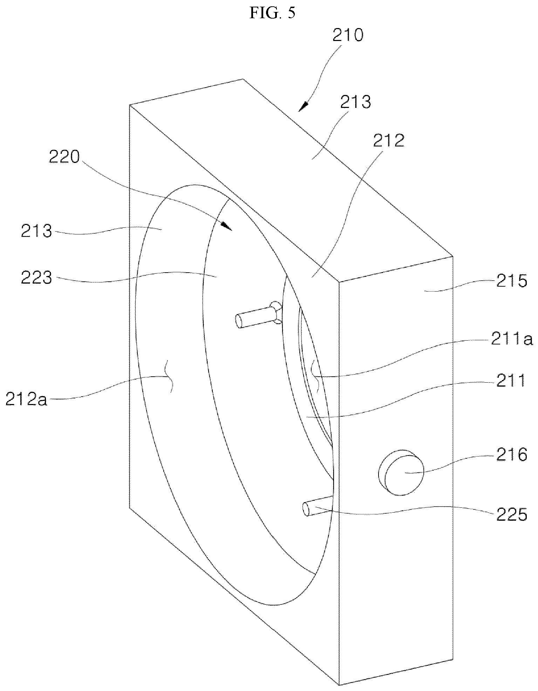

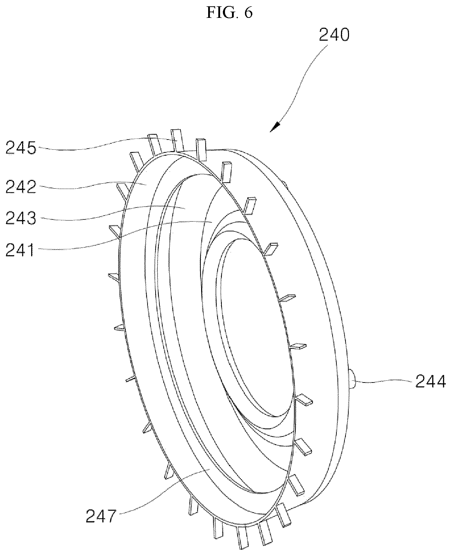

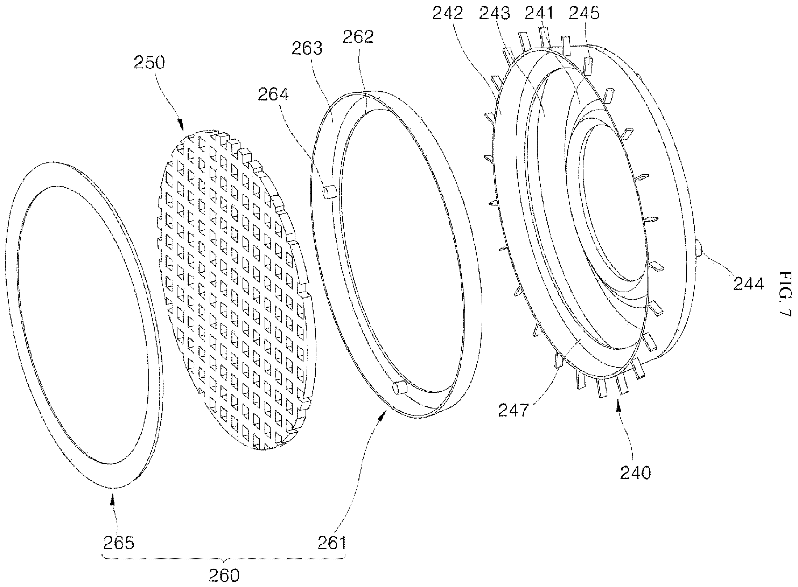

FIG. 5 is a cross-sectional view along line "V-V" in FIG. 3, FIG. 6 is a perspective view separately showing a case and a shroud according to one embodiment of the present invention, and FIG. 7 is a perspective view separately showing an orifice shell according to one embodiment of the present invention.

Referring to FIGS. 4 and 5, the flow guide part forms a discharge passage a connecting the fan 231 with the outlet O. The discharge passage a may guide the movement of the air discharged from the fan 231 so that the direction of the movement of the air moving toward the outlet O becomes a direction between the first direction and the centrifugal direction, that is, a direction between the front and the centrifugal direction.

The flow guide part forming the discharge passage includes a shroud 220 and an orifice shell 240.

The shroud 220 is accommodated inside the case 210, that is, in the accommodation space. The shroud 220 is provided to surround the fan 231 outside in the radial direction. In the present embodiment, it is shown that the shroud 220 is formed integrally with the case 210. That is, the shroud 220 may be provided as a single component in which the case 210 and the shroud 220 are formed integrally. As an example, the shroud 220 may be provided in a form including an outer skirt portion 221 and an outer connection portion 223.

The outer skirt portion 221 may form a surface extending from the first surface 211 in a direction between the first direction and the centrifugal direction, that is, in a direction between the front and the centrifugal direction from the first surface 211. In addition, the outer connection portion 223 may connect the first surface 211 with the outer skirt portion 221 to be rounded.

In the present embodiment, it is shown that the outer skirt portion 221 is formed in a hollow cylindrical or truncated cone shape. The outer connection portion 223 that connects a rear end portion of the outer skirt portion 221 with the first surface 211 to be rounded may be formed in a bowl shape having a substantially circular cross section.

As another example, the shroud 220 may include the rear surface 211. When the case 210 and the shroud 220 are formed integrally, the rear surface 211 of the shroud 220 may replace the first surface 211 of the case 210.

Referring to FIGS. 5 to 7, the orifice shell 240 may be disposed at the front side of the shroud 220. The orifice shell 240 is provided to surround the fan 231 outside in the radial direction. The orifice shell 240 is disposed between the fan 231 and the shroud 220 with respect to the radial direction. The discharge passage a formed by the flow guide part is formed between the shroud 220 and the orifice shell 240.

In the present embodiment, it is shown that the orifice shell 240 includes a ring-shaped portion 241, an inner skirt portion 242, and an inner connection portion 243.

The ring-shaped portion 241 may be disposed in front of the first surface 211 and disposed to be spaced at a predetermined distance from the first surface 211 in the front-rear direction. In the present embodiment, it is shown that the ring-shaped portion 241 is formed in a substantially ring shape. For example, the ring-shaped portion 241 may be provided in a form of a hollow formed in a circular plate with respect to the axis in the front-rear direction. A first through hole 241a may be formed inside the ring-shaped portion 241 in the radial direction. The first through hole 241a may be formed to pass through the ring-shaped portion 241 in the front-rear direction.

The inner skirt portion 242 may form a surface extending from the ring-shaped portion 241 in a direction between the first direction and the centrifugal direction, that is, in a direction between the front and the centrifugal direction from the ring-shaped portion 241. In addition, the inner connection portion 243 may connect the first surface 211 with the outer skirt portion 221 to be rounded.

In the present embodiment, it is shown that like the outer skirt portion 221, the inner skirt portion 242 is formed in a hollow cylindrical or truncated cone shape. The inner connection portion 243 and the ring-shaped portion 241 connected to the rear end portion of the inner skirt portion 242 to be rounded may be formed in a bowl shape having a substantially circular cross section.

The inner connection portion 243 may be disposed in front of the outer connection portion 223. The fan 231 may be disposed between the outer connection portion 223 and the inner connection portion 243 with respect to the front-rear direction. In addition, the inner skirt portion 242 may be disposed between the fan 231 and the outer skirt portion 221 with respect to the radial direction.

The outer connection portion 223 and the inner connection portion 243 may be disposed to be spaced at a predetermined distance from each other in the front-rear direction. In addition, the outer skirt portion 221 and the inner skirt portion 242 may be disposed to be spaced at a predetermined distance from each other in the radial direction. The discharge passage a formed by the flow guide part may be formed between the inner skirt portion 242 and the outer skirt portion 221 and between the inner connection portion 243 and the outer connection portion 223.

According to the present embodiment, the shroud 220 and the ring-shaped portion 241, or the first surface 211 and the ring-shaped portion 241 may be spaced at a predetermined distance from each other in the front-rear direction and coupled in the front-rear direction. To this end, the shroud 220 may include a coupling protrusion 225, and the orifice shell 240 may include a coupling boss 244.

The coupling protrusion 225 may be formed to protrude from the first surface 211 or the shroud 220 in the first direction, more specifically, forward. In the present embodiment, it is shown that a plurality of coupling protrusions 225 are disposed in a form that surrounds the installation hole 211a.

In this case, each coupling protrusion 225 may be disposed to be spaced at a predetermined distance from each other in a circumferential direction of the installation hole 211a. In addition, each coupling protrusion 225 may be disposed outward from the fan 231 in the radial direction so as not to interfere with the fan 231 in the process of being coupled to the coupling boss 244.

The coupling boss 244 may be provided on the first surface 211 or one side surface of the ring-shaped portion 241 facing the coupling protrusion 225. For example, the coupling boss 244 may be provided on a rear surface of the ring-shaped portion 241. In the present embodiment, it is shown that a plurality of coupling bosses 244 are disposed in a form that surrounds the first through hole 241a.

The orifice shell 240 may be provided with the coupling bosses 244 corresponding one-to-one to the coupling protrusions 225, and the coupling bosses 244 may be disposed at locations overlapping the coupling protrusions 225 in the front-rear direction. In addition, each coupling boss 244 may be disposed outside the fan 231 in the radial direction so as not to interfere with the fan 231 in the process of being coupled to the coupling protrusion 225.

The coupling boss 244 provided as described above may be coupled to the coupling protrusion 225 in the front-rear direction. In the present embodiment, it is shown that the coupling protrusion 225 is inserted into the coupling boss 244 and coupled by being fitted into the coupling boss 244.

The coupling protrusion 225 and the coupling boss 244 may be coupled at a plurality of points in the circumferential direction of the ring-shaped portion 241. Therefore, the shroud 220 and the orifice shell 240 may be stably coupled, and the shroud 220 and the orifice shell 240 may be coupled in a form in which the shroud 220 and the orifice shell 240 are spaced at a predetermined distance from each other in the front-rear direction.

The orifice shell 240 may be spaced by about a length of the coupling protrusion 225 in the front-rear direction from the shroud 220 and installed at the front side of the shroud 220. In this case, a distance between the shroud 220 and the orifice shell 240 may be set to correspond to about the length of the fan module 230 in the front-rear direction.

As described above, the orifice shell 240 may be installed at the front side of the shroud 220 in a form in which the shroud 220 and the orifice shell 240 are spaced at a predetermined distance from each other in the front-rear direction, thereby effectively securing a space necessary to install the fan module 230 and forming the discharge passage a having a sufficient width between the shroud 220 and the orifice shell 240.

### [Filter and its support structure]

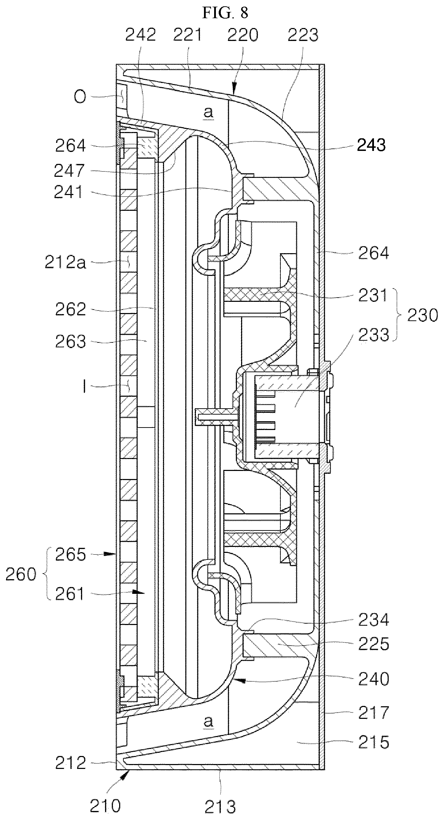

FIG. 8 is a perspective view separately showing an orifice shell, a filter, and a fixing cover according to another embodiment of the present invention.

Referring to FIGS. 5 and 8, the movable hood 2 according to the present embodiment may further include a filter 250. The filter 250 may be disposed between the inlet I and the fan 231, that is, at the front side of the fan 231. The filter 250 may serve to filter the outside air suctioned into the fan 231.

The filter 250 may be formed in a shape corresponding to a shape of a second through-hole 212a or a front shape of the orifice shell 240. In the present embodiment, it is shown that the filter 250 is formed in a circle corresponding to the shape of the front surface of the orifice shell 240.

The filter 250 may be provided in a form including at least any one of a pre-filter, an oil-mist filter/grease filter, an odor filter, a dust filter, a deodorizing filter, and a sterilizing filter.

The pre-filter may be used to catch large dust and oil particles, and the oil mist filter may be used to remove oil vapor generated during cooking. In addition, the deodorizing filter may be formed of activated carbon, etc., which removes odors, and the dust filter is a filter used to remove fine dust.

The filter 250 may be any one of the filters or formed in combination of the filters.

Meanwhile, the orifice shell 240 may further include support wings 247. The support wing 247 may protrude from the inner skirt portion 242 in a centripetal direction that is inward in the radial direction. As an example, the support wing 247 may be formed to protrude in a ring shape from an inner circumferential surface of the inner skirt portion 242. The support wings 247 may serve to restrict the locations of the filter 250 in the front-rear direction.

In addition, the movable hood 2 according to the present embodiment may further include a fixing cover 260. The fixing cover 260 may fix the filter 250 to the orifice shell 240. The fixing cover 260 may be in contact with the support wings 247 and coupled to the orifice shell 240.

The fixing cover 260 may include a first fixing cover portion 261 and a second fixing cover portion 265.

The first fixing cover portion 261 may be formed in a shape including a ring shape similar to the shape of the support wing 247. The first fixing cover portion 261 may be coupled to the inside of the inner skirt portion 242 in the radial direction so that a rear end portion thereof is in contact with the support wings 247. As described above, the first fixing cover portion 261 coupled to the orifice shell 240 may support the filter 250 at the rear side.

In the present embodiment, it is shown that the first fixing cover portion 261 includes a support surface 262 and an extension surface 263.

The support surface 262 may be formed in a ring shape corresponding to the support wing 247. The support surface 262 may be disposed between the support wings 247 and the filter 250 with respect to the front-rear direction.

The extension surface 263 may extend from the support surface 262 in the front-rear direction. In the present embodiment, it is shown that the extension surface 263 extends forward from the support surface 262. The extension surface 263 may be disposed between the inner skirt portion 242 and the filter 250 with respect to the radial direction.

As described above, the first fixing cover portion 261 including the support surface 262 and the extension surface 263 may support the filter 250 at the rear side and the radial outside of the filter 250.

A plurality of support protrusions 264 may be arranged in a circumferential direction of the support surface 262 on the first fixing cover portion 261. Each support protrusion 264 may be formed to protrude forward from the support surface 262 and may support the filter 250 at the rear side.

The filter 250 may be supported by the support protrusion 264 and disposed to be spaced at a predetermined distance from the support surface 262. Therefore, it is possible to decrease a contact area between the filter 250 and the first fixing cover portion 261 and increase an area through which air may pass of the filter 250 accordingly. As a result, it is possible to effectively increase the flow rate and air volume of the suction flow that passes through the filter 250 and flows into the movable hood 2.

The second fixing cover portion 265 is a component disposed at the front side of the fixing cover 260. The second fixing cover portion 265 may be disposed at the frontmost side of the movable hood 2 together with a cover surface 212 of the case 210 to be described below to form the appearance of the front surface of the movable hood 2.

The second fixing cover portion 265 may support the filter 250 at the front side and may be coupled to the first fixing cover portion 261 or the inner skirt portion 242. The filter 250 may be pressed in the front-rear direction by the first fixing cover portion 261 at the rear side and the second fixing cover portion 265 at the front side and coupled to the orifice shell 240 in a state of being fixed to the inside of the fixing cover 260.

### [Formation structures of the inlet, the discharge port, and the discharge passage]

Referring to FIGS. 3 to 5, the case 210 may further include the cover surface 212. The cover surface 212 may be disposed at a location biased to the front side more than the fan 231 and may form a surface perpendicular to the front-rear direction. The cover surface 212 may be disposed at the front side of the case 210 to form the front surface of the case 210.

The second through hole 212a may be provided in the cover surface 212. The second through hole 212a may be formed to pass through the cover surface 212 in the front-rear direction. In the present embodiment, it is shown that the second through hole 212a occupies most of the cover surface 212. For example, 2/3 or more of the cover surface 212 may be occupied by the second through hole 212a.

The second through hole 212a formed as described above may communicate with the first through hole 241a in the front-rear direction. In addition, the first through-hole 241a may communicate with the discharge passage a in the radial direction, and the discharge passage a may communicate with the second through-hole 212a in the front-rear direction. That is, the first through hole 241a, the second through hole 212a, and the discharge passage a may communicate with each other in the case 210.

Referring to FIGS. 5 to 7, the outer skirt portion 221 may be connected to an inner circumferential surface of the cover surface 212 surrounding the second through hole 212a. According to the present embodiment, the rear end portion of the outer skirt portion 221 may be connected to the outer connection portion 223, and the outer connection portion 223 may be connected to the rear side of the first through hole 241a outside the first through hole 241a in the radial direction. In addition, a front end portion of the outer skirt portion 221 may be connected to the inner circumferential surface of the cover surface 212.

As an example, the case 210 and the shroud 220 may be formed integrally, and the cover surface 212 of the case 210 formed integrally and the outer skirt portion 221 of the shroud 220 may be connected integrally.

The inner skirt portion 242 may be disposed to be spaced at a predetermined distance from the outer skirt portion 221 in the radial direction in the second through hole 212a. According to the present embodiment, the rear end portion of the inner skirt portion 242 may be connected to the inner connection portion 243, the inner connection portion 243 may be connected to the ring-shaped portion 241, and the first through hole 241a may be formed.

The orifice shell 240 may be disposed in the area surrounded by the shroud 220. That is, the ring-shaped portion 241 that is a portion disposed at the rearmost part of the orifice shell 240 may be disposed in front of the rearmost portion of the shroud 220, and the inner skirt portion 242 and the inner connection portion 243 may be disposed inside the shroud 220 in the radial direction.

A front end portion of the inner skirt portion 242 disposed inside the second through hole 212a may also be disposed inside the outer skirt portion 221 in the radial direction. In addition, the front end portion of the inner skirt portion 242 may be spaced at a predetermined distance from the front end portion of the outer skirt portion 221 in the radial direction.

Therefore, the second through hole 212a may be partitioned into the inlet I and the outlet O using the inner skirt portion 242 as the boundary. Since both the inlet I and the outlet O are disposed on the second through hole 212a, the inlet I and the outlet O may be arranged coplanarly in the radial direction. Among them, the inlet I may be disposed inside the inner skirt portion 242 in the radial direction, and the outlet O may be disposed outside the inner skirt portion 242 in the radial direction.

The filter 250 may be disposed at the rear side of the inlet I. That is, the filter 250 may be disposed between the inlet I and the fan 231, and the air introduced through the inlet I may be suctioned into the fan 231 after passing through the filter 250.

In contrast, the air moving to the outlet O through the discharge passage a does not pass through the filter 250. It is because the filter 250 is not disposed on the discharge passage a connected to the outlet O.

Meanwhile, the movable hood 2 according to the present embodiment may further include a plurality of blades 245. The blade 245 may be disposed in the second through hole 212a, more specifically, at the outlet O. The plurality of blades 245 may be arranged to be spaced a predetermined distance from each other in a circumferential direction of the second through hole 212a.

As an example, the blade 245 may connect the inner skirt portion 242 with the outer skirt portion 221. As another example, the blade 245 may connect the inner circumferential surface of the cover surface 212 with the outer skirt portion 221. In the present embodiment, it is shown that the blade 245 connects the inner skirt portion 242 with the outer skirt portion 221.

In addition, the blade 245 may be provided on the orifice shell 240. Therefore, the plurality of blades 245 may be provided on an outer circumferential surface of the outer skirt portion 221 in a circumferential direction of the outer skirt portion 221. Each blade 245 may be formed to protrude from the front end portion of the outer skirt portion 221 in the centrifugal direction.

The blades 245 may be spaced at a predetermined distance from each other in the circumferential direction of the outer skirt portion 221, and an outer end portion of the blade 245 in the radial direction may be in contact with the inner circumferential surface of the cover surface 212 or an inner circumferential surface of the outer skirt portion 221. In the present embodiment, it is shown that the outer end portion of the blade 245 in the radial direction is in contact with the inner circumferential surface of the outer skirt portion 221.

As an example, the coupling between the orifice shell 240 on which the blade 245 is provided and the shroud may include two types of couplings. One of the two couplings is the coupling between the coupling protrusion 225 and the coupling boss 244 that have been already described. In addition, the other is the coupling between the outer skirt portion 221 and the blade 245.

The coupling between the outer skirt portion 221 and the blade 245 may be in a form in which the blade 245 presses an inner surface of the outer skirt portion 221 and is forcefully fitted into the outer skirt portion 221.

Therefore, the blade 245 may be stably fixed inside the orifice shell, and in addition, a coupling portion between the orifice shell 240 and the shroud may be added to the front sides of the orifice shell 240 and the shroud 220, thereby more stably maintaining a fixed state between the orifice shell 240 and the shroud 220.

The blade 245 provided as above may provide the following functions.

First, the blade 245 supports the inner skirt portion 242 and the outer skirt portion 221 while being connected by the blade 245, and thus a shape of the outlet O formed on the front surface of the movable hood 2 can be stably maintained.

Second, the blade 245 may guide the flow of the air discharged from the outlet O. For example, the blade 245 can increase a discharge distance of the discharge flow by improving the straightness of the air discharged from the outlet O and serve to guide the direction of the movement of the air discharged from the outlet O.

Third, the blade 245 may also serve as a blocking structure for suppressing large-sized foreign substance from permeating the movable hood 2 through the outlet O. Unlike the inlet I, the filter 250 is not disposed at the rear side of the outlet O, and thus there is a possibility that foreign substance may permeate the movable hood 2 through the outlet O.

The blade 245 disposed at the outlet O may serve as a blocking structure for suppressing large-sized foreign substance from permeating the movable hood 2 through the outlet O, thereby contributing to preventing the outlet O from being clogged or damage to an internal component of the movable hood 2 due to the large-sized foreign substance.

In the present embodiment, it is shown that the blade 245 is provided on the orifice shell 240, but the present invention is not limited thereto. As another example, various modified embodiments related to the blade 245 are possible, such as the blade 245 being provided on the shroud 220.

According to the above-described structure of the movable hood 2, the inlet I and the outlet O are disposed at a location biased to the front side more than the fan 231. In addition, the outlet is disposed outside the inlet I with respect to the radial direction.

Therefore, in the movable hood 2 according to the present embodiment, outside air is suctioned through the inlet I disposed in front of the fan 231. In addition, the air suctioned into the movable hood 2 by the fan 231 is discharged forward from the fan 231 and discharged through the outlet O disposed outside the inlet I in the radial direction.

That is, the suction of the outside air into the movable hood 2 and the discharge of the air suctioned into the movable hood 2 to the outside of the movable hood 2 is performed in front of the fan 231, and the discharge of the air through the outlet O is performed radially outside the area in which the suction of the air through the inlet I is performed.

The flow of the air discharged through the outlet O, that is, the discharge flow may form the air curtain in front of the movable hood 2. The air curtain formed as described above may block the flow of the air located in a lateral outer area of the air curtain and the movable hood 2, thereby preventing the air located in the lateral outer area of the air curtain from being suctioned to the movable hood 2.

Therefore, since a condition in which the air located in a lateral inner area of the air curtain may be suctioned into the movable hood 2 may be effectively established, it is possible to more effectively suction polluted air generated in front of the movable hood 2.

Meanwhile, the outlet O is formed with the discharge passage a, and the discharge passage a forms a passage connecting a discharge side of the fan 231 with the outlet O. The discharge passage a may be formed between the inner skirt portion 242 and the outer skirt portion 221 and between the inner connection portion 243 and the outer connection portion 223.

In the discharge passage a, a section formed between the inner connection portion 243 and the outer connection portion 223 corresponds to a section (hereinafter referred to as a "first section") adjacent to the fan 231, and a section formed between the inner skirt portion 242 and the outer skirt portion 221 corresponds to a section (hereinafter referred to as a "second section") adjacent to the outlet O.

According to the present embodiment, a width of the outlet O may be set to be smaller than or equal to a width of the discharge passage a. In addition, the width of the discharge passage a may be set to gradually become narrower toward the outlet O. To this end, a gap between the outer skirt portion 221 and the inner skirt portion 242 may be set to gradually become narrower forward.

When the discharge passage a is formed as described above, a moving rate of the air discharged from the fan 231 gradually increases while passing through the discharge passage a. As a result, the rate of the discharge flow discharged through the outlet O may increase, thereby effectively increasing the strength and operating distance of the air curtain formed by the discharge flow.

### [Structures of a battery and a display]

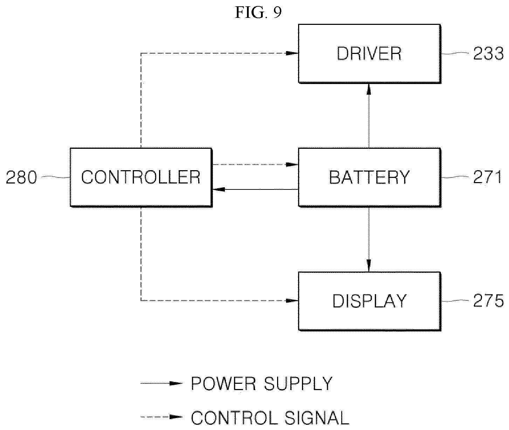

FIG. 9 is a configuration diagram schematically showing a portion of a configuration of the movable hood according to one embodiment of the present invention.

As shown in FIGS. 3, 4, and 9, the movable hood 2 according to the present embodiment may further include a battery 271 and a battery case 270.

The battery 271 may be electrically connected to the driver 233 to supply power to the driver 233. The battery 271 may be disposed at one side or the other side of the case 210 in the second direction, that is, at an upper or lower side of the case 210. In addition, the battery case 270 may accommodate the battery 271 therein and may be installed at the upper or lower side of the case 210.

By providing the battery 271 in the movable hood 2, the installation place of the movable hood 2 is not limited to a location at which power may be supplied from an external power source. That is, the movable hood 2 according to the present embodiment may effectively treat the polluted air generated in the cooking process even at a location at which it is difficult to receive the power from the external power source.

The battery 271 may be provided in a rechargeable form, and to this end, the movable hood 2 may further be provided with a terminal for charging the battery 271.

According to the present embodiment, the battery 271 and the battery case 270 may be installed at the lower side of the case 210. The battery 271 is provided as a heavier member than the case 210 and the components accommodated in the case 210. Preferably, the battery 271 may be provided to have a heavier weight than the sum of the weights of the case 210, the fan module 230, and the flow guide part.

Typically, since the weight per unit volume of the battery 271 is much heavier than the weight per unit volume of the case 210, the fan module 230, and the flow guide part, even when the weight or size of the battery 271 is not artificially increased, it is not difficult for the battery 271 to be formed of the heavier member than the case 210, the fan module 230, and the flow guide part.

That is, even when the battery 271 having the capacity required for normal use of the movable hood 2 is applied to the movable hood 2, the battery 271 may be naturally provided as the heavier member than the case 210 and the components accommodated inside the case 210.

As described above, when the heavy battery 271 is disposed at the lower side of the case 210, the risk of the movable hood 2 falling over is reduced. That is, since the center of gravity of the movable hood 2 is located at the lower side due to the battery 271 disposed at the lower side of the movable hood 2, the movable hood 2 does not easily fall down.

In addition, the movable hood 2 according to the present embodiment may further include a display 275. The display 275 may be disposed at the front side of the battery case 270 and electrically connected to the battery 271. The display 275 may receive power from the battery 271 and display various pieces of information about the operation of the movable hood 2.

For example, the display 275 may display an operating state of the movable hood 2, an intensity of the air volume, a state of the battery 271, etc. In addition, when the movable hood 2 is provided with a sensor for detecting air quality, information about the air quality may be displayed through the display 275.

Meanwhile, the movable hood 2 according to the present embodiment may further include a controller 280. The controller 280 may receive power through the battery 271 and control operations of the driver 233, the display 275, etc.

### [Function and effect of the movable hood]

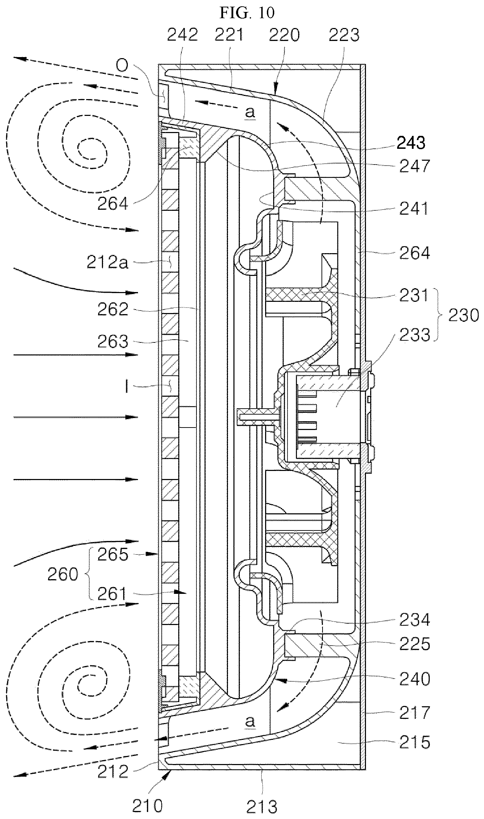

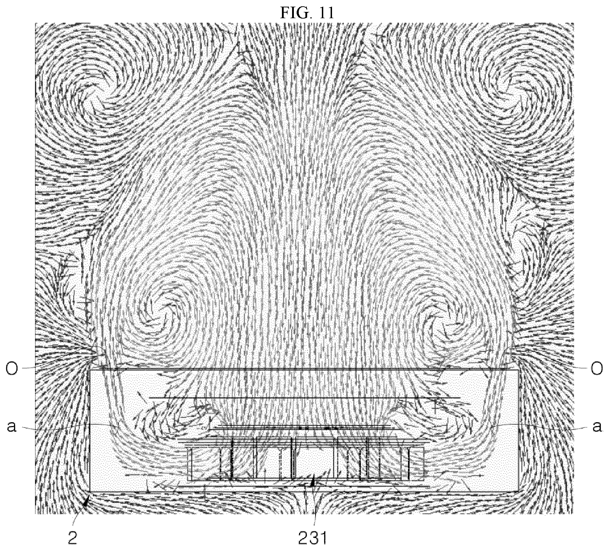

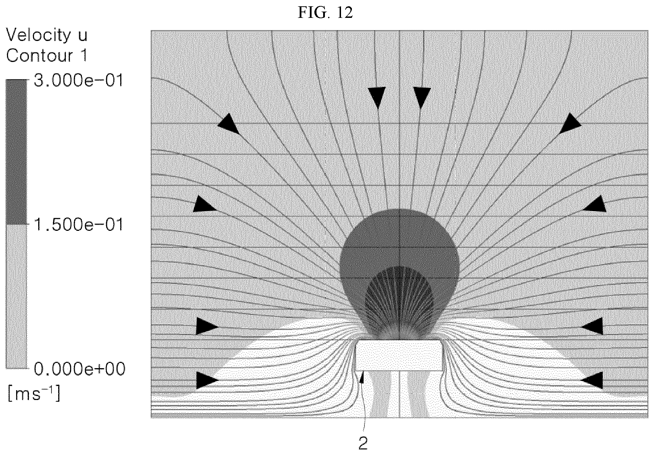

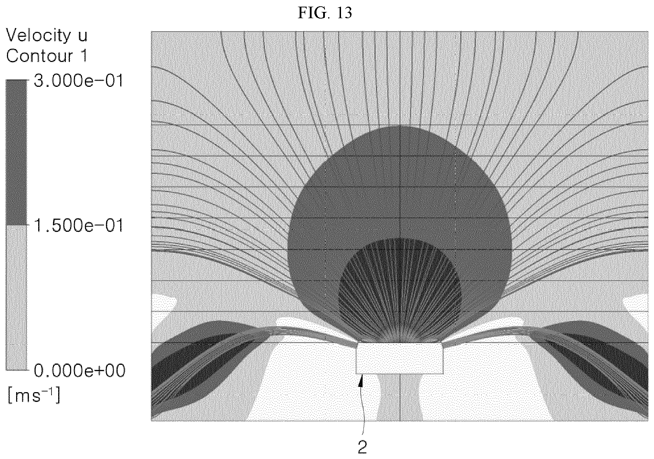

FIG. 10 is a side cross-sectional view showing an airflow inside the movable hood shown in FIG. 5, and FIG. 11 is a side cross-sectional view showing the trend of a rate of the airflow near a range hood without air curtain function. In addition, FIG. 12 is a side cross-sectional view showing the trend of a rate of the airflow near the movable hood in an operating state of the movable hood shown in FIG. 5, and FIG. 13 is a side cross-sectional view showing an air volume state near the movable hood in the operating state of the movable hood shown in FIG. 5.

Hereinafter, the operation and effect of the movable hood according to the present embodiment will be described with reference to FIGS. 10 to 17.

It should be noted that lines shown in FIG. 11 are lines indicating an air volume, and the closer the color of the line indicating the air volume is to blue, the lower the air volume is, and the closer the color of the line indicating the air volume is to red, the higher the air volume is.

In addition, it should be noted that lines shown in FIGS. 12 and 13 are lines indicating an air volume, and the closer the color of the line indicating the air volume is to blue, the lower the air volume is, and the closer the color of the line indicating the air volume is to red, the higher the air volume is.

Referring to FIG. 10, the movable hood 2 according to the present embodiment may be disposed adjacent to a cooking vessel for generating polluted air in the cooking process. The movable hood 2 may purify the polluted air generated during cooking while changing the location thereof as needed rather than being fixedly installed at any one location.

As an example, even when cooking is performed using a portable burner in a place other than a kitchen, for example, a room or a lounge, the movable hood 2 according to the present embodiment may be disposed near its cooking location to purify the polluted air generated from the cooking vessel heated by the portable burner.

The movable hood 2 according to the present embodiment may be installed at various locations in various forms by freely changing the location and attitude thereof. The movable hood 2 may effectively suction the polluted air generated from the cooking vessel when the front surface thereof is disposed to face the cooking vessel.

In the conventional range hood without the air curtain function, as shown in FIG. 35, not only the suction of the polluted air generated from the cooking vessel, but also the suction of air at other locations unrelated to the cooking location are performed together.

For example, not only the air including the polluted air generated at the front side of the movable hood is suctioned, but also the air at the side or rear side of the range hood is suctioned.

The suction power generated by the first fan module spreads and acts in all directions near the movable hood 1, thereby making it difficult to effectively suction the polluted air generated at the front side of the range hood.

That is, as the suction power generated by the suction fan is evenly dispersed and applied both to the front side and in other directions, the strength of the suction power acting on the front side of the range hood inevitably becomes weaker accordingly.

Therefore, it is difficult for the smoke and pollutants generated from the cooking vessel to be effectively suctioned into the range hood. That is, as the strength of the suction power acting on the front side of the range hood weakens, the suction possible area of the range hood is inevitably reduced.

As shown in FIG. 12, when the fan module 230 is operated, air in the front of the movable hood 2 flows into the movable hood 2 through the inlet I. In this case, the air introduced through the inlet I may be purified by the filter 250 while passing through the filter 250, and the purified air may be suctioned into the fan 231.

The air suctioned into the fan 231 may be discharged from the fan 231 in the centrifugal direction. The air discharged from the fan 231 may flow into the discharge passage a formed outside the fan 231 in the radial direction. The air flowing into the discharge passage a may move toward the outlet O along the discharge passage a and may be discharged to the front side of the movable hood 2 through the outlet O.

The air discharged as described above may form an air curtain that surrounds the suction flow at both sides in the left-right direction. The air curtain allows the suction power generated by the fan module 230 to mainly act in the area surrounded by the air curtain, thereby increasing the strength of the suction flow generated in front of the movable hood 2.

For example, as shown in FIGS. 11 to 13, the air curtain may block the flow of the air located in the lateral outer area of the air curtain and the movable hood 2, thereby preventing the air located in the lateral outer area of the air curtain from being suctioned into the movable hood 2.

Therefore, since the condition necessary to increase the intensity of the flow of the air formed in the area surrounded by the air curtain, that is, the suction flow may be effectively established, it is possible to effectively increase the intensity of the suction flow, thereby more effectively suctioning the polluted air.

Therefore, the movable hood 2 according to the present embodiment can effectively contribute to suppressing the spread of pollutants in the cooking space by effectively suctioning, purifying, and then discharging the pollutants without spreading the pollutants.

In addition, referring to FIGS. 11 and 13, some of the discharge flow forming the air curtain may be affected by the suction power acting on the front side of the movable hood 2 by being generated by the fan module 230 and re-suctioned into the movable hood 2. The air discharged through the outlet O is in a state of being purified already passing through the filter 250 once. When the air is re-suctioned into the movable hood 2, the air may be re-purified by passing through the filter 250 once more.

While the movable hood 2 is operating, the above phenomenon may occur repeatedly. Therefore, it is possible to achieve the n^{th} filtering effect in which air is filtered multiple times by the filter 250. Therefore, the movable hood 2 according to the present embodiment can provide the more improved air purification effect.

Due to the characteristics of the movable hood 2 provided to enable movement arrangement, the movable hood 2 according to the present embodiment does not discharge the suctioned polluted air to the outside, filters the polluted air through the filter 250, and then re-discharges the polluted air therein.

Therefore, the movable hood 2 according to the present embodiment needs to provide a much higher level of pollutant removal performance than a range hood in a form that suctions polluted air and then discharges the polluted air to the outside.

In addition, the movable hood 2 according to the present embodiment does not form an upward suction flow at the top of the cooking vessel P, but forms a suction flow outside the cooking vessel P in the horizontal direction. The movable hood 2 according to the present embodiment needs to provide a higher level of suction performance and pollutant removal performance than a range hood that forms an upward suction flow.

That is, since the movable hood 2 according to the present embodiment forms the suction flow outside the cooking vessel P in the horizontal direction and re-discharges the suctioned polluted air therein without discharging the suctioned polluted air to the outside, the movable hood 2 should provide a high level of suction performance and pollutant removal performance.

Considering such a point, the movable hood 2 according to the present embodiment can improve suction performance by guiding the suction of the polluted air through the air curtain formed by the fan module and at the same time, achieve the n^{th} filtering effect in which the polluted air is repeatedly suctioned multiple times and filtered.

The movable hood 2 according to the present embodiment can further provide the following effects.

First, the movable hood 2 according to the present embodiment can purify the polluted air generated during cooking while changing the location as needed rather than being fixedly installed at any one location. The movable hood has an advantage that can be highly used because the movable hood may be used by being moved to a place desired by the user, such as a kitchen, a dining table, a room, a lounge, a living room, or an outdoor.

Second, since the movable hood 2 according to the present embodiment can provide the more improved suction performance and pollutant removal performance by forming the air curtain near the suction flow to increase the suction efficiency for the polluted air generated from a cooking object.

Third, the movable hood 2 according to the present embodiment can provide the more improved pollutant removal performance by achieving the n^{th} filtering effect in which the polluted air is repeatedly suctioned and filtered multiple times.

The movable hood 2 according to the present embodiment may be disposed to be freely moved to various locations other than the typical hood installation location, thereby more efficiently collecting the pollutants generated in the cooking process and very effectively purifying polluted air near the cooking area.

Fourth, the movable hood 2 according to the present embodiment can very effectively increase the collection efficiency for the pollutants without increasing the suction rate of the fan by increasing the suction efficiency for the polluted air using the air curtain as described above. Therefore, the movable hood 2 according to the present embodiment can effectively increase the collection efficiency for pollutants without significantly increasing power consumption.

Fifth, the movable hood 2 according to the present embodiment can improve the suction performance of the movable hood 2 without the hassle of installing an additional structure by allowing the air curtain formed by the operation of the fan module to serve as a structure such as a blocking film or an awning.

In addition, when the structure such as a blocking film or an awning is installed in the cooking space, the structure may interfere with the activity of a user who is cooking. In contrast, the movable hood 2 according to the present embodiment can improve suction performance without interfering with the activity of the user who is cooking by allowing the air curtain formed by the operation of the fan module to serve as the structure such as a blocking film or an awning.

Sixth, the movable hood 2 according to the present embodiment can be provided in a shape having a small thickness sufficiently installed even in the narrow cooking space by allowing the suction of the outside side through the inlet and the discharge of the air through the outlet to be performed by one fan.

Seventh, the movable hood 2 according to the present embodiment can effectively form the air curtain without separately adding the fan for forming the air curtain by forming the air curtain using the discharge flow generated from the fan module 230 suctioning the polluted air.

The movable hood 2 according to the present embodiment can suppress an increase in the manufacturing cost and the manufacturing process and provide more improved performance.

Eighth, the movable hood 2 according to the present embodiment can stably maintain the combustion of the heating device that generates a flame, for example, the gas cook-top, and effectively remove the pollutants generated by the heat generated by the corresponding heating device.

In the case of the range hood that uses a swirler or a vortex fan, there is a problem such as the fact that the vortex generated from the swirler or the vortex fan reach the flame of the gas cook-top, thereby causing the flame to shake and affecting the combustion of the gas cook-top.

In contrast, in the movable hood 2 according to the present embodiment, like the discharge flow forming the air curtain that faces the side and front side without facing the front side toward the heating device, any discharge flow generated from the movable hood 2 does not face the heating device.

Therefore, the movable hood 2 according to the present embodiment can effectively improve the suction performance of the movable hood 2 without affecting the combustion of the heating device that generates a flame, such as the gas cook-top.

Ninth, the movable hood 2 according to the present embodiment can effectively suppress the polluted air from facing the user by forming the air curtain using the air purified by the filter 250 inside the movable hood 2.

The movable hood 2 according to the present embodiment can provide the effect of significantly reducing the discomfort felt by the user when the airflow forming the air curtain reaches the user.

Moreover, the movable hood 2 according to the present embodiment can provide the more improved air purification effect by implementing the n^{th} filtering effect in which the air is filtered multiple times by the filter 250, thereby more effectively improving the air quality of the air curtain.

The present invention has been described with reference to the embodiments shown in the accompanying drawings, but it is merely illustrative, and those skilled in the art to which the relevant technology pertains will understand that various modifications and other equivalent embodiments are possible therefrom. Therefore, the true technical scope of the present invention should be determined by the scope of the appended claims.

### <Description of reference numerals>

2: movable hood
210: case
211: first surface
211a: installation hole
212: cover surface
212a: second through hole
213: second surface
215: third surface
216: protruding shaft
217: bracket plate
219: support
219a: fitting hole
220: shroud
221: outer skirt portion
223: outer connection portion
225: coupling protrusion
230: fan module
231: fan
233: driver
240: orifice shell
241: ring-shaped portion
241a: first through hole
242: inner skirt portion
243: inner connection portion
244: coupling boss
245: blade
247: support wing
250: filter
260: fixing cover
261: first fixing cover portion
262: support surface
263: extension surface
264: support protrusion
265: second fixing cover portion
270: battery case
271: battery
275: display
280: controller
a: discharge passage
I: inlet
O: outlet

## Claims

1. A movable hood comprising:
a case (210) in which an accommodation space having an open one side in a first direction is formed;
a fan (231) accommodated in the accommodation space, configured to suction outside air through an inlet (I), and discharge at least some of the suctioned air through a discharge port (O);
a shroud (220) accommodated in the accommodation space and surrounding the fan (231) outside in a radial direction; and
an orifice shell (240) disposed between the fan (231) and the shroud (220) with respect to the radial direction and surrounding the fan (231) outside in the radial direction,
wherein the inlet (I) and the discharge port (O) are disposed at a location biased to one side in the first direction more than the fan (231),
a discharge passage (a) connecting the fan (231) with the discharge port (O) is formed between the shroud (220) and the orifice shell (240), and
the discharge port (O) is disposed outside the inlet (I) with respect to the radial direction orthogonal to the first direction,
**characterized in that**
the case (210) is provided to be seated on a ground surface or an upper plate of a sink or a floor of a dining table.

2. The movable hood of claim 1, wherein the fan (231) discharges at least some of the suctioned air in a centrifugal direction that is a direction facing outside in the radial direction, and
the discharge passage (a) guides movement of the air discharged from the fan (231) so that a movement direction of the air moving toward the discharge port (O) becomes a direction between the first direction and the centrifugal direction.

3. The movable hood of claim 1 or 2, wherein a width of the discharge port (O) is smaller than or equal to a width of the discharge passage (a), and
the width of the discharge passage (a) is gradually reduced toward the discharge port (O).

4. The movable hood of any one of the preceding claims 1 to 3, wherein the case (210) and the shroud (220) are formed integrally.

5. The movable hood of any one of the preceding claims 1 to 4, wherein the case (210) is disposed at a location biased to the other side in the first direction more than the fan (231) and including a first surface forming a surface orthogonal to the first direction,
the shroud (220) includes an outer skirt portion (221) forming a surface extending from the first surface in a direction between the first direction and the centrifugal direction, and an outer connection portion (223) connecting the first surface with the outer skirt portion (221) to be rounded, and
the orifice shell (240) is disposed between the fan (231) and the outer skirt portion (221) with respect to the radial direction.

6. The movable hood of claim 5, wherein the orifice shell (240) includes:
a ring-shaped portion (241) disposed to be spaced at a predetermined interval from the first surface in the first direction and having a first through hole (241a) therein in the radial direction;
an inner skirt portion (242) forming a surface extending from the ring-shaped portion (241) in a direction between the first direction and the centrifugal direction; and
an inner connection portion (243) connecting the ring-shaped portion (241) with the inner skirt portion (242) to be rounded, and
the inner skirt portion (242) is disposed between the fan (231) and the outer skirt portion (221) with respect to the radial direction.

7. The movable hood of claim 6, wherein the outer connection portion (223) and the inner connection portion (243) are disposed to be spaced at a predetermined interval from each other in the first direction,
the outer skirt portion (221) and the inner skirt portion (242) are disposed to be spaced at a predetermined interval from each other in the radial direction, and
the discharge passage (a) is formed between the outer connection portion (223) and the inner connection portion (243) and between the outer skirt portion (221) and the inner skirt portion (242).

8. The movable hood of any one of the preceding claims 1 to 7, wherein an interval between the shroud (220) and the orifice shell (240) is gradually reduced toward one side in the first direction.

9. The movable hood of any one of the preceding claims 1 to 8, when dependent on claim 6, wherein the case (210) is disposed at a location biased to one side in the first direction more than the fan (231) and including a cover surface (212) forming a surface orthogonal to the first direction,
a second through hole (212a) is formed to pass through the cover surface (212) in the first direction, and
the first through hole (241a) and the second through hole (212a) communicate with the discharge passage (a).

10. The movable hood of claim 9, wherein an end portion of the one side in the first direction of the shroud (220) is connected to an inner circumferential surface of the cover surface (212) surrounding the second through hole (212a),
the end portion of the one side in the first direction of the orifice shell (240) is disposed to be spaced at a predetermined interval from the shroud (220) in the radial direction inside the second through hole (212a), and
the second through hole (212a) is partitioned into an inlet (I) inside the radial direction and the discharge port (O) outside in the radial direction using the orifice shell (240) as a boundary.

11. The movable hood of claim 10, wherein the inlet (I) and the discharge port (O) are arranged coplanarly in the radial direction.

12. The movable hood of any one of the preceding claims 1 to 11, wherein the case (210) is disposed at a location biased to the other side in the first direction more than the fan (231) and including a first surface forming a surface orthogonal to the first direction, and
the orifice shell (240) is disposed to be spaced at a predetermined interval from the first surface in the first direction and includes a ring-shaped portion (241) having a first through hole (241a) formed therein in the radial direction, and the shroud (220) and the ring-shaped portion (241) or the first surface and the ring-shaped portion (241) are spaced at a predetermined interval from each other in the first direction and are coupled in the first direction.

13. The movable hood of any one of the preceding claims 1 to 12, further comprising a filter (250) disposed between the inlet (I) and the fan (231) to filter the air suctioned into the fan (231).

14. The movable hood of claim 13, wherein the orifice shell (240) further includes a ring-shaped support wing (247) protruding from the inner skirt portion (242) in a centripetal direction that is a direction facing the inside in the radial direction, and
a location of the filter (250) in the first direction is restricted by the support wing (247).

15. The movable hood of any one of the preceding claims 1 to 14, further comprising:
a driver (233) configured to rotate the fan (231); and
a battery (271) electrically connected to the driver (233),
wherein the battery (271) is disposed at one side or the other side of the case (210) in the second direction.

## Patentansprüche

1. Bewegliche Abzugshaube, aufweisend:
ein Gehäuse (210), in dem ein Aufnahmeraum ausgebildet ist, der auf einer Seite in einer ersten Richtung offen ist;
ein Gebläse (231), das in dem Aufnahmeraum aufgenommen und dazu eingerichtet ist, Außenluft durch einen Einlass (I) anzusaugen und mindestens einen Teil der angesaugten Luft durch eine Auslassöffnung (O) auszustoßen;
eine Ummantelung (220), die in dem Aufnahmeraum aufgenommen ist und das Gebläse (231) in einer radialen Richtung außen umgibt; und
eine Blendenschale (240), die bezüglich der radialen Richtung zwischen dem Gebläse (231) und der Ummantelung (220) angeordnet ist und das Gebläse (231) in der radialen Richtung außen umgibt,
wobei der Einlass (I) und die Auslassöffnung (O) an einer Position angeordnet sind, die gegenüber dem Gebläse (231) in der ersten Richtung weiter zu einer Seite hin versetzt ist,
ein Auslasskanal (a), der das Gebläse (231) mit der Auslassöffnung (O) verbindet, zwischen der Ummantelung (220) und der Blendenschale (240) ausgebildet ist, und
die Auslassöffnung (O) bezüglich der zu der ersten Richtung orthogonalen radialen Richtung außerhalb des Einlasses (I) angeordnet ist,
**dadurch gekennzeichnet, dass**
das Gehäuse (210) dazu vorgesehen ist, auf einer Bodenfläche oder einer oberen Platte einer Spüle oder einer Tischplatte eines Esstisches aufgesetzt zu werden.

2. Bewegliche Abzugshaube nach Anspruch 1, wobei das Gebläse (231) mindestens einen Teil der angesaugten Luft in einer Zentrifugalrichtung ausstößt, die eine in der radialen Richtung nach außen gerichtete Richtung ist, und
der Auslasskanal (a) die Bewegung der von dem Gebläse (231) ausgestoßenen Luft so führt, dass eine Bewegungsrichtung der sich zu der Auslassöffnung (O) hin bewegenden Luft zwischen der ersten Richtung und der Zentrifugalrichtung verläuft.

3. Bewegliche Abzugshaube nach Anspruch 1 oder 2, wobei eine Breite der Auslassöffnung (O) kleiner als oder gleich einer Breite des Auslasskanals (a) ist, und
die Breite des Auslasskanals (a) sich zu der Auslassöffnung (O) hin allmählich verringert.

4. Bewegliche Abzugshaube nach einem der vorhergehenden Ansprüche 1 bis 3, wobei das Gehäuse (210) und die Ummantelung (220) einstückig ausgebildet sind.

5. Bewegliche Abzugshaube nach einem der vorhergehenden Ansprüche 1 bis 4, wobei das Gehäuse (210) an einer Position angeordnet ist, die gegenüber dem Gebläse (231) in der ersten Richtung weiter zu der anderen Seite hin versetzt ist, und eine erste Fläche aufweist, die eine zu der ersten Richtung orthogonale Fläche bildet,
die Ummantelung (220) einen äußeren Schürzenabschnitt (221), der eine Fläche bildet, die sich von der ersten Fläche in einer Richtung zwischen der ersten Richtung und der Zentrifugalrichtung erstreckt, und einen äußeren Verbindungsabschnitt (223) aufweist, der die erste Fläche mit dem äußeren Schürzenabschnitt (221) in abgerundeter Weise verbindet, und
die Blendenschale (240) bezüglich der radialen Richtung zwischen dem Gebläse (231) und dem äußeren Schürzenabschnitt (221) angeordnet ist.

6. Bewegliche Abzugshaube nach Anspruch 5, wobei die Blendenschale (240) Folgendes aufweist:
einen ringförmigen Abschnitt (241), der in der ersten Richtung mit einem vorbestimmten Abstand von der ersten Fläche angeordnet ist und in dem sich in der radialen Richtung eine erste Durchgangsöffnung (241a) befindet;
einen inneren Schürzenabschnitt (242), der eine Fläche bildet, die sich von dem ringförmigen Abschnitt (241) in einer Richtung zwischen der ersten Richtung und der Zentrifugalrichtung erstreckt; und
einen inneren Verbindungsabschnitt (243), der den ringförmigen Abschnitt (241) mit dem inneren Schürzenabschnitt (242) in abgerundeter Weise verbindet, und
der innere Schürzenabschnitt (242) bezüglich der radialen Richtung zwischen dem Gebläse (231) und dem äußeren Schürzenabschnitt (221) angeordnet ist.

7. Bewegliche Abzugshaube nach Anspruch 6, wobei der äußere Verbindungsabschnitt (223) und der innere Verbindungsabschnitt (243) in der ersten Richtung mit einem vorbestimmten Abstand voneinander angeordnet sind,
der äußere Schürzenabschnitt (221) und der innere Schürzenabschnitt (242) in der radialen Richtung mit einem vorbestimmten Abstand voneinander angeordnet sind, und
der Auslasskanal (a) zwischen dem äußeren Verbindungsabschnitt (223) und dem inneren Verbindungsabschnitt (243) und zwischen dem äußeren Schürzenabschnitt (221) und dem inneren Schürzenabschnitt (242) ausgebildet ist.

8. Bewegliche Abzugshaube nach einem der vorhergehenden Ansprüche 1 bis 7, wobei ein Abstand zwischen der Ummantelung (220) und der Blendenschale (240) sich zu einer Seite in der ersten Richtung hin allmählich verringert.

9. Bewegliche Abzugshaube nach einem der vorhergehenden Ansprüche 1 bis 8, soweit von Anspruch 6 abhängig, wobei das Gehäuse (210) an einer Position angeordnet ist, die gegenüber dem Gebläse (231) in der ersten Richtung weiter zu einer Seite hin versetzt ist, und eine Abdeckfläche (212) aufweist, die eine zu der ersten Richtung orthogonale Fläche bildet,
eine zweite Durchgangsöffnung (212a) so ausgebildet ist, dass sie die Abdeckfläche (212) in der ersten Richtung durchquert, und
die erste Durchgangsöffnung (241a) und die zweite Durchgangsöffnung (212a) mit dem Auslasskanal (a) in Verbindung stehen.

10. Bewegliche Abzugshaube nach Anspruch 9, wobei ein Endabschnitt der Ummantelung (220) auf der einen Seite in der ersten Richtung mit einer inneren Umfangsfläche der Abdeckfläche (212), die die zweite Durchgangsöffnung (212a) umgibt, verbunden ist,
der Endabschnitt der Blendenschale (240) auf der einen Seite in der ersten Richtung innerhalb der zweiten Durchgangsöffnung (212a) in der radialen Richtung mit einem vorbestimmten Abstand von der Ummantelung (220) angeordnet ist, und
die zweite Durchgangsöffnung (212a) unter Verwendung der Blendenschale (240) als Begrenzung in einen Einlass (I) innen in der radialen Richtung und die Auslassöffnung (O) außen in der radialen Richtung unterteilt ist.

11. Bewegliche Abzugshaube nach Anspruch 10, wobei der Einlass (I) und die Auslassöffnung (O) in der radialen Richtung koplanar angeordnet sind.

12. Bewegliche Abzugshaube nach einem der vorhergehenden Ansprüche 1 bis 11, wobei das Gehäuse (210) an einer Position angeordnet ist, die gegenüber dem Gebläse (231) in der ersten Richtung weiter zu der anderen Seite hin versetzt ist, und eine erste Fläche aufweist, die eine zu der ersten Richtung orthogonale Fläche bildet, und
die Blendenschale (240) in der ersten Richtung mit einem vorbestimmten Abstand von der ersten Fläche angeordnet ist und einen ringförmigen Abschnitt (241) aufweist, in dem in der radialen Richtung eine erste Durchgangsöffnung (241a) ausgebildet ist, und die Ummantelung (220) und der ringförmige Abschnitt (241) oder die erste Fläche und der ringförmige Abschnitt (241) in der ersten Richtung mit einem vorbestimmten Abstand voneinander angeordnet und in der ersten Richtung gekoppelt sind.

13. Bewegliche Abzugshaube nach einem der vorhergehenden Ansprüche 1 bis 12, ferner aufweisend einen Filter (250), der zwischen dem Einlass (I) und dem Gebläse (231) angeordnet ist, um die in das Gebläse (231) angesaugte Luft zu filtern.

14. Bewegliche Abzugshaube nach Anspruch 13, wobei die Blendenschale (240) ferner einen ringförmigen Stützflügel (247) aufweist, der von dem inneren Schürzenabschnitt (242) in einer Zentripetalrichtung vorsteht, die eine in der radialen Richtung nach innen gerichtete Richtung ist, und
eine Position des Filters (250) in der ersten Richtung durch den Stützflügel (247) beschränkt wird.

15. Bewegliche Abzugshaube nach einem der vorhergehenden Ansprüche 1 bis 14, ferner aufweisend:
einen Antrieb (233), der dazu eingerichtet ist, das Gebläse (231) zu drehen; und
eine Batterie (271), die elektrisch mit dem Antrieb (233) verbunden ist,
wobei die Batterie (271) in der zweiten Richtung an einer Seite oder der anderen Seite des Gehäuses (210) angeordnet ist.

## Revendications

1. Hotte mobile comprenant :
un boîtier (210) dans lequel est formé un espace de réception ouvert d'un côté dans une première direction ;
un ventilateur (231) logé dans l'espace de réception, configuré pour aspirer de l'air extérieur par une entrée (I) et évacuer au moins une partie de l'air aspiré par un orifice d'évacuation (O) ;
une enveloppe (220) logée dans l'espace de réception et entourant le ventilateur (231) à l'extérieur dans une direction radiale ; et
une coque à orifice (240) disposée entre le ventilateur (231) et l'enveloppe (220) par rapport à la direction radiale et entourant le ventilateur (231) à l'extérieur dans la direction radiale,
dans laquelle l'entrée (I) et l'orifice d'évacuation (O) sont disposés à un emplacement plus décalé vers un côté dans la première direction que le ventilateur (231),
un passage d'évacuation (a) reliant le ventilateur (231) à l'orifice d'évacuation (O) est formé entre l'enveloppe (220) et la coque à orifice (240), et
l'orifice d'évacuation (O) est disposé à l'extérieur de l'entrée (I) par rapport à la direction radiale orthogonale à la première direction,
**caractérisée en ce que**
le boîtier (210) est prévu pour être posé sur une surface de sol ou une plaque supérieure d'un évier ou une surface d'une table à manger.

2. Hotte mobile selon la revendication 1, dans laquelle le ventilateur (231) évacue au moins une partie de l'air aspiré dans une direction centrifuge qui est une direction orientée vers l'extérieur dans la direction radiale, et
le passage d'évacuation (a) guide le déplacement de l'air évacué du ventilateur (231) de sorte qu'une direction de déplacement de l'air se déplaçant vers l'orifice d'évacuation (O) devienne une direction comprise entre la première direction et la direction centrifuge.

3. Hotte mobile selon la revendication 1 ou 2, dans laquelle une largeur de l'orifice d'évacuation (O) est inférieure ou égale à une largeur du passage d'évacuation (a), et
la largeur du passage d'évacuation (a) est progressivement réduite vers l'orifice d'évacuation (O).

4. Hotte mobile selon l'une quelconque des revendications précédentes 1 à 3, dans laquelle le boîtier (210) et l'enveloppe (220) sont formés d'un seul tenant.

5. Hotte mobile selon l'une quelconque des revendications précédentes 1 à 4, dans laquelle le boîtier (210) est disposé à un emplacement plus décalé vers l'autre côté dans la première direction que le ventilateur (231) et comprend une première surface formant une surface orthogonale à la première direction,
l'enveloppe (220) comprend une partie de jupe extérieure (221) formant une surface s'étendant depuis la première surface dans une direction comprise entre la première direction et la direction centrifuge, et une partie de raccordement extérieure (223) reliant la première surface à la partie de jupe extérieure (221) de manière arrondie, et
la coque à orifice (240) est disposée entre le ventilateur (231) et la partie de jupe extérieure (221) par rapport à la direction radiale.

6. Hotte mobile selon la revendication 5, dans laquelle la coque à orifice (240) comprend:
une partie annulaire (241) disposée de manière à être espacée de la première surface d'un intervalle prédéterminé dans la première direction et présentant un premier trou traversant (241a) en son sein dans la direction radiale ;
une partie de jupe intérieure (242) formant une surface s'étendant depuis la partie annulaire (241) dans une direction comprise entre la première direction et la direction centrifuge ; et
une partie de raccordement intérieure (243) reliant la partie annulaire (241) à la partie de jupe intérieure (242) de manière arrondie, et
la partie de jupe intérieure (242) est disposée entre le ventilateur (231) et la partie de jupe extérieure (221) par rapport à la direction radiale.

7. Hotte mobile selon la revendication 6, dans laquelle la partie de raccordement extérieure (223) et la partie de raccordement intérieure (243) sont disposées de manière à être espacées l'une de l'autre d'un intervalle prédéterminé dans la première direction,
la partie de jupe extérieure (221) et la partie de jupe intérieure (242) sont disposées de manière à être espacées l'une de l'autre d'un intervalle prédéterminé dans la direction radiale, et
le passage d'évacuation (a) est formé entre la partie de raccordement extérieure (223) et la partie de raccordement intérieure (243) et entre la partie de jupe extérieure (221) et la partie de jupe intérieure (242).

8. Hotte mobile selon l'une quelconque des revendications précédentes 1 à 7, dans laquelle un intervalle entre l'enveloppe (220) et la coque à orifice (240) est progressivement réduit vers un côté dans la première direction.

9. Hotte mobile selon l'une quelconque des revendications précédentes 1 à 8, en cas de dépendance à la revendication 6, dans laquelle le boîtier (210) est disposé à un emplacement plus décalé vers un côté dans la première direction que le ventilateur (231) et comprend une surface de couverture (212) formant une surface orthogonale à la première direction,
un deuxième trou traversant (212a) est formé de manière à traverser la surface de couverture (212) dans la première direction, et
le premier trou traversant (241a) et le deuxième trou traversant (212a) communiquent avec le passage d'évacuation (a).

10. Hotte mobile selon la revendication 9, dans laquelle une partie d'extrémité du côté considéré dans la première direction de l'enveloppe (220) est reliée à une surface circonférentielle intérieure de la surface de couverture (212) entourant le deuxième trou traversant (212a),
la partie d'extrémité du côté considéré dans la première direction de la coque à orifice (240) est disposée de manière à être espacée de l'enveloppe (220) d'un intervalle prédéterminé dans la direction radiale à l'intérieur du deuxième trou traversant (212a), et
le deuxième trou traversant (212a) est divisé en une entrée (I) à l'intérieur dans la direction radiale et l'orifice d'évacuation (O) à l'extérieur dans la direction radiale en utilisant la coque à orifice (240) comme limite.

11. Hotte mobile selon la revendication 10, dans laquelle l'entrée (I) et l'orifice d'évacuation (O) sont disposés de manière coplanaire dans la direction radiale.

12. Hotte mobile selon l'une quelconque des revendications précédentes 1 à 11, dans laquelle le boîtier (210) est disposé à un emplacement plus décalé vers l'autre côté dans la première direction que le ventilateur (231) et comprend une première surface formant une surface orthogonale à la première direction, et
la coque à orifice (240) est disposée de manière à être espacée de la première surface d'un intervalle prédéterminé dans la première direction et comprend une partie annulaire (241) présentant un premier trou traversant (241a) formé en son sein dans la direction radiale, et l'enveloppe (220) et la partie annulaire (241) ou la première surface et la partie annulaire (241) sont espacées l'une de l'autre d'un intervalle prédéterminé dans la première direction et sont couplées dans la première direction.

13. Hotte mobile selon l'une quelconque des revendications précédentes 1 à 12, comprenant en outre un filtre (250) disposé entre l'entrée (I) et le ventilateur (231) pour filtrer l'air aspiré dans le ventilateur (231).

14. Hotte mobile selon la revendication 13, dans laquelle la coque à orifice (240) comprend en outre une ailette de support annulaire (247) faisant saillie depuis la partie de jupe intérieure (242) dans une direction centripète qui est une direction orientée vers l'intérieur dans la direction radiale, et
un emplacement du filtre (250) dans la première direction est limité par l'ailette de support (247).

15. Hotte mobile selon l'une quelconque des revendications précédentes 1 à 14, comprenant en outre :
un organe d'entraînement (233) configuré pour faire tourner le ventilateur (231) ; et
une batterie (271) reliée électriquement à l'organe d'entraînement (233),
dans laquelle la batterie (271) est disposée d'un côté ou de l'autre côté du boîtier (210) dans la deuxième direction.
